# EUROPEAN PATENT APPLICATION

(11) **EP 2 633 762 A1**
(43) Date of publication of application: **04.09.2013**
(21) Application number: 13169924.1
(22) Date of filing: 12.03.2010
(51) Int. Cl.: A23K 1/00, A23K 1/06, A23K 1/16, A23K 1/175

(54) **A method of reducing the rate of degradation of a biological material**

(30) Priority: 20.03.2009 ZA 200902000
(62) Divisional of application: 10711081.9
(71) Applicant: Bio-Energy Ingredients Limited, Surrey RH7 6LH (GB)
(72) Inventor: Houseman, Richard Alwyn, Harrogate, Yorkshire HG3 3RH (GB); Venter, Abraham Christo, Reading, Berkshire RG1 4AE (GB)
(74) Representative: Selby, David Sean

(57) **Abstract**

A method of producing an animal feed product from a wet biological material, having a physical form selected from solutions, suspensions, emulsions, gums, mousses, sludges, slurries, and particulate materials, includes the step of combining the biological material with a base comprising a metal oxide in an amount which is sufficient to heat the biological material to a temperature of above 50°C by reaction of water in the biological material with the metal oxide to produce the animal feed product. The product has a physical form which is easier to handle than that of the wet biological material and is selected from particulate materials and, granular materials. The base is preferably calcium oxide.

## Description

THIS INVENTION relates to an energy efficient method of producing solid, optionally preserved biological materials from wet biological materials or biological by-products and to solid, optionally preserved biological materials produced by the method.

Biological materials which can be used as animal feedstuffs or which can be incorporated in animal feedstuffs are often initially isolated in a pourable, liquid form, for example following extraction, distillation or centrifuge processes. These liquid materials are costly and/or difficult to handle, store and transport and are also subject to degradation through microbial action. Examples of such materials include yeast cream suspensions and yeast cream concentrates produced, for example, by distillation and extraction processes, yeast cell wall suspensions produced, for example, by autolysis and centrifuge processes, liquid betaine extracts, pot ale syrups, stillage and other fermentation solubles produced, for example, by distillation processes, plant extracts and raffinates.

Yeast cell wall (YCW) is obtained through autolising yeast and separation from the soluble yeast extract by centrifugation. The resulting yeast cell wall suspension is typically spray dried or roller dried. Yeast cell wall consists of 30-60 % polysaccharides (beta-glucan and mannan sugar polymers), 15-30 % proteins, 5-20 % lipids and a small amount of chitin. Most of the protein is linked to the Mannan-Oligo-Saccharides (MOS) and is referred to as the Mannoprotein complex. Typically yeast cell wall contains 15-30 % beta-glucan and 15-30 % MOS. Yeast cell wall is a non-specific stimulator of the immune system of both man and animals. Numerous scientific studies have shown that when ingested orally Yeast Beta-Glucan can stimulate the cells of the immune system (macrophages) and help to overcome bacterial infections. Yeast cell wall is also known to act as a mycotoxin binder. Mannan-Oligo-Saccharide (MOS) has been demonstrated to prevent diarrhoea in weaning pigs. MOS binds to pathogenic bacteria in the gut and then carries them through and out of the intestinal tract. MOS also has prebiotic activity and can serve as a nutrient source for the growth of beneficial bacteria in the colon. Yeast cell wall is also applied in the wine industry. Its ability to bind undesirable components allows it to prevent and cure stuck fermentations. Drying yeast cell wall suspensions with a dry matter content of typically 9-12 % is generally difficult and involves spray drying which is expensive. By using the process of the invention yeast cell wall suspensions can be transformed in a liquid-to-solid transformation process into solid materials in an economical and environmentally friendly manner to provide yeast cell wall products as free-flowing powders or granules.

Trimethyl glycine (CAS 107-43-7), or betaine, is a natural product which was originally named betaine after its discovery in sugar beets (*Beta vulgaris*) in the 19th century. This small N-trimethylated amino acid exists as the zwitterion (CH₃)₃N⁺CH₂CO₂⁻ at neutral pH. This substance is often called "glycine betaine" to distinguish it from other betaines that are widely distributed in biological systems. Sugar beet contains 0.2 - 0.3% betaine which is typically extracted using water as eluent to produce liquid betaine. This material can be crystallised to produce a solid betaine product such as betaine hydrochloride (CH₃)₃N⁺CH₂CO₂⁻·HCl. Betaine hydrochloride (CAS 590-46-5) is glycine betaine with a chloride counter-ion and is usually the first crystallised form obtained after extraction from beets. Glycinebetaine occurs naturally in many organisms including several plants. In plants glycinebetaine acts as an osmoprotectant by adjusting the osmotic balance inside the plant cells and tissues. By this natural defence mechanism, glycinebetaine helps plants to overcome the environmental stresses caused by heat, salinity, drought and cold, which are the worst enemies of plant productivity.

Dietary sources of betaine include fish, beets, and legumes. Betaine is most widely available as betaine hydrochloride (betaine-HCl), a non-essential nutrient and source of hydrochloric acid for people with hypochlorhydria (low stomach acid). In particular, betaine hydrochloride is necessary for adequate absorption of protein, calcium, vitamin B₁₂ and iron. Betaine hydrochloride is also an efficient, high-quality and economical nutritional additive promoting growth and widely used for animal, poultry and aquatic breeding. As an efficient methyl supplier, it can partly take the place of methionine and choline chloride, and lowers the cost of feed. Its effective value is said to be 3 times that of DL-methionine and 1.8 times that of 50% choline chloride. It promotes the metabolism of fat, improves the lean meat rate of animal and poultry and the quality of meat, and lowers the ratio of feed and meat. It is an appetite enhancer for animals and makes the feed more agreeable to the taste of animals. It also promotes the growth of poultry and aquatic animals, buffers changes of osmotic pressure and may improve the ability to adapt to changes in the environment such as temperature fluctuations and the survival rate of immature fish and shrimps. Betaine citrate and betaine aspartate have also been used to improve liver function. Crystalline betaine phosphate (betaine-H₃PO₄) is also known from the literature.

Pot Ale Syrup (PAS) is a by-product obtained from the manufacture of malt whisky and mainly comprises yeast cells and residues from malted barley after alcohol has been distilled off the fermented wort at high temperature in copper stills. Wort is the liquid extracted from the mashing process during the brewing of beer or whisky. Wort contains the sugars that are fermented by the brewing yeast to produce ethanol. At several distilleries, Pot Ale Syrup is mixed back with the spent grains (Draff) resulting, after drying, in the production of Distillers Dark Grains.

Other types of biological materials which can be used as animal feedstuffs or which can be incorporated in animal feedstuff can be in the form of wet gums or in a mousse-like form. Wet gums are produced as by-products of the refining of oils extracted from seeds such as rapeseed through a degumming process. The refined oil can be used for biodiesel production. Wet gum is a phospholipid rich material and is problematic in terms of handling, storage and transportation due to its physical characteristics being a non-pourable cream or mousse-like material with a low density. The refined oil is used is used as a starting material for biodiesel production.

Other types of biological materials which can be used as animal feedstuffs or which can be incorporated in animal feedstuffs are fermentation residues. Fermentation residues can contain between about 10% and 90% of free moisture the balance being biomass. The composition of the biomass is determined by the nature of the material fermented. Typically the amount of water or free moisture contained in a fermentation residue will be between about 40% and 90% on a mass to mass basis and more typically between about 70% and 80%. A portion of the water may be contained inside the grains and the amount of free water depends on the physical state of the material.

Fermentation residues arise from the fermentation of grains such as oats, barley, hops or corn, or from the fermentation of syrups such as corn syrups, pot ale syrup, molasses, sugars such as those derived from sugar cane or sugar beet, condensed molasses solubles (CMS), vinasse, starches, amino acids, yeasts or materials derived from the fermentation of cellulosic materials such as wood products or other cellulosic plant material. These residues can for example be produced from bio-ethanol production or from the production of other alcohols. The residues remain after the ethanol has been removed.

Ethanol production from grains employs enzymes produced from yeast. At the start of the process, water is added to grains, and this liquor is cooked and the gelatinised starch is hydrolysed into sugars. The liquor is separated, and the fibrous insolubles are set aside. A selected strain of yeast is added to the liquor containing suspended and dissolved solids of sugars, proteins, nucleotides, yeasts, enzymes, minerals. The warm, thin stillage substrate provides an ideal medium for yeast growth converting most of the carbohydrates present into ethanol. The substrate is then passed through distillation columns and the ethanol is captured for use as a fuel. The remaining ethanol and sugar-free substrate is known as stillage or pot ale syrup depending on the process. Yeasts can be extracted from the stillage as yeast cream which can represent 15% of the dry matter of the post-distillation stillage. Yeast creams can be concentrated for example by serial centrifuge to produce a wet yeast protein concentrate (YPC) as a thin aqueous suspension. YPC is a high value powder nutrient which can be used for feeding to animals such as pigs and ruminants and has human food applications. The yeast extracted post-distillation stillage and any non-yeast extracted stillage is then disposed of by incorporating with the fibrous insolubles (as a carrier) and the wet distiller's and solubles are delivered fresh to local pig and ruminant farms, or dried to produce a feedstuff known as dried distiller's grains and soluble (DDGS). The drying process is usually carried out using rotating drum kiln driers fired by conventional fossil fuels. Drying is necessary as wet distillers grains (WDG) and solubles are highly susceptible to rapid degradation as a result of microbial action. DDGS may also contain high concentrations of mycotoxins which are anti-nutritional and have high sulphur levels which can cause lung function disorders. The high-temperature drying can also reduce the digestibility of amino acids in the DDGS.

In general, prior to use in animal feeds wet biological materials or biological by-products, optionally after blending with other products, have to undergo a drying step in order to preserve them from rapid degradation through microbial action however conventional, uncontrolled, heat drying can be detrimental to the nutritional value of the residues as a result of degradation of proteins at high temperatures. On the other hand without a preservation step such as conventional heat drying, secondary fermentation and other degradation processes occur. These processes render the products unusable in animal feeds. The Applicant has found that, if untreated, degradation of these products commences within a few hours of production and the products are generally unfit for use within about three to seven days. However both blending and conventional heat drying are energy-intensive and expensive processes. Other disadvantages of conventional heat drying include the negative environmental impact thereof, an increase in the concentration of mycotoxin content if mycotoxins are already present, heat-destruction of nutritional components and the need to keep the product dry during storage and transportation in order to avoid degradation through microbial action for example the growth of mycotoxin-producing fungi.

There is therefore a requirement for a liquid-to-solid transformation and preservation process to produce solid, preserved materials with improved physical state characteristics, preferably free-flowing particulate materials such as powders or granules. It is therefore an object of the invention to modify such materials, in order to transform their physical properties to improve handling, storage and transportation and as an additional benefit to decrease the rate of, or to prevent, degradation and thereby to impart an extended shelf life to the materials. It is also an object of the invention to preserve the materials without resorting to, or at least substantially reducing, the requirement for conventional heat drying. It is an additional object of the invention to provide a self-sterilising material which does not require storage in a dry environment to avoid bacterial growth and mycotoxin formation through fungal growth.

It is thus an object of the invention to transform liquid or semi liquid biological materials which are difficult to handle, such as solutions, suspensions and emulsions into easy to handle materials such as granular or powdery materials. In particular, it is an object of the invention to transform thick, non-pourable, difficult-to-handle, wet, bio-materials such as gums, mousses, sludges, slurries and pastes, for example wet gums which are produced as a by-product of vegetable oil refining through degumming or wet fermentation residue sludges and the like with a high moisture content, in which a significant portion of the water is present as free water and not contained within the grains, into preserved materials such as free-flowing powders or granules.

In the case of wet, particulate bio-materials such as wet distiller's grains with a high moisture content wherein a significant portion of the water is encapsulated inside the grains into preserved materials, the materials do not necessarily require a transformation of physical state in order to improve handling. It is also an object to combine the above processes.

The invention extends to the treatment of any waste residue stream from bio-fuel production and other fermentative processes.

The products of the invention include materials in the form of powders, granules, flakes, particles, pieces and the like as well as materials which are semi-solid materials and which do not flow easily or at all, such as gums, pastes, creams, gummy granules and the like.

The invention thus provides a method of transforming or treating a material which is in an undesirable physical state and/or subject to microbiological degradation through microbial action, the material being useful as an animal feedstuff or for incorporation in an animal feedstuff in order to reduce the rate of the microbiological degradation thereby to improve the physical characteristics and/or extend the shelf life where necessary of the material, the material containing water and the method including the step of adding a suitable base to the material, following pH optimisation thereof if required depending on the pH of the wet starting material, to produce a self-sterilising, preserved material with an extended shelf life and improved physical form.

In the context of this specification, an animal feed product is a product which is selected from products which are useful as animal feedstuffs, products which can be used to produce materials which are useful as animal feedstuffs, products which can be used as components of animal feedstuffs and products which can be used to produce components which can be used in animal feedstuffs. By a "base" is meant a compound or mixture which may be, or may include, a single basic compound or a mixture of different basic compounds.

More particularly, the invention provides a method of producing an animal feed product from a wet biological material, the wet biological material having a physical form selected from solutions, suspensions, emulsions, gums, mousses, sludges, slurries, pastes and particulate materials, and the method including the step of combining the biological material with a metal oxide in an amount which is sufficient to heat the biological material to a temperature of above 50°C by reaction of water in the biological material with the metal oxide to produce the animal feed product, the product having a physical form which is easier to handle that that of the wet biological material and which is selected from particulate materials and granular materials.

In the context of this specification, particulate and granular materials include powders, flakes, pellets, grits, crumbs, crumbles, chips, nuts and meal.

According to this aspect of the invention, the addition of a suitable quantity of a metal oxide results in some of the free water reacting to produce a hydroxide in an exothermic reaction between the metal oxide and the free water which leads to a rise in temperature. The temperature rise is determined by the amount of free water present in the material and the amount of oxide used. In the method of the invention a temperature rise takes place under typical operating conditions. When treating a wet biological material such as a fermentation residue in which most of the water is contained within the grains the temperature is relatively low but when treating a wet biological material with a high free or non-encapsulated water content, the temperature increases to 100 degrees Celsius or more. The temperature rise is a function of factors such as the pH and free water content of the biomaterial, the amount of oxide added, agitation, reactor design and the like. The pH values of the wet biological material can vary considerably, and may require pH adjustment by addition of additional components such as organic or inorganic acids prior. When an acid is added to the wet biological material or biological by-product, the reaction of the resulting material with the base is enhanced particularly, but not exclusively, in the case of a reactive metal oxide such as calcium oxide. The exothermic reaction aids to drive off water from the material and enhance the drying of the material. The solid product materials typically have pH values of above pH 12.

The acid may be selected from inorganic acids such as phosphoric acid, hydrochloride acid and sulphuric acid, and organic acids such as palmitic acid, stearic acid, lactic acid, amino acids, derivatives thereof, analogues thereof and mixtures thereof.

The pre-weighed base will typically be added to a pre-selected weight of the wet biological material whilst the mixture is thoroughly mixed. In the case of semi solid or solid material shredding of the biological material releases water trapped inside the particles or grains and this, in the case of treatment with a metal oxide, enhances the reaction of the water with the oxide and thus increases the degree and rate of the temperature increase. The temperature increase will also be affected by the amount of active oxide added. Water can initially be removed from the fermentation residue by compressing it. This typically removes about 10-20% of the water trapped inside the grains or particles before treatment. The compressed residue can also be combined with the base with or without shredding. It is further an option to add some of the water back to the fermentation residue during, or prior to, addition of the base to increase contact of the base with the water contained in the fermentation residue and also to eliminate or minimise the potential loss of water-soluble nutrients.

Preferably the amount of the metal oxide will be sufficient to heat the biological material to a temperature of above 70°C and more preferably to a temperature of above 90°C.

The metal oxide may calcium oxide and may be in a form selected from powder, granules and mixtures thereof. The method may include the additional step of treating the wet biological material with at least one acid prior to combining the wet biological material with the metal oxide. The acid may selected from phosphoric acid, hydrochloric acid, sulphuric acid and organic acids.

The organic acid may, for example, be selected from palmitic acid, stearic acid, lactic acid, amino acids, derivatives thereof, analogues thereof and combinations thereof.

The method may include the step of combining the material with an energy enhancing additive prior to, during or after combining the material with the base. The energy-enhancing additive may be an additive such as glycerol, which improves the palatability and energy content of the feedstuff. Naturally, any other suitable additive may be added to the material prior to, during or after combining the material with the base.

The method may thus include the additional step of adding a diluent selected from water, an animal feed compatible material and combinations thereof to the wet biological material. The animal feed compatible material may, for example, be glycerol.

The wet biological material may be selected, for example, from yeast cream suspensions, yeast wall suspensions, liquid betaine extracts, pot ale syrups, distillers grains, yeast protein concentrates, wet gums, wet distillers solubles and mixtures of any two or more thereof.

The weight ratio between the calcium oxide and the wet biological material may be between about 1:1 and 1:10. The weight ratio between the wet biological material and the acid may between about 1:0 and 1:0,9 and, preferably, between about 1:0 and 1:0,5. The weight ratio between the wet biological material and the glycerol may be between about 1:0 and 1:2.

The invention also provides a method of producing an animal feed product from a wet biological material or by-product, the biological material or by-product having a shelf life of between about 1 and 7 days and a physical form selected from solutions, suspensions, emulsions, gums, mousses, sludges, slurries, pastes and particulate materials, and the method including the step of combining the biological material or by-product with a base to produce the animal feed product, the animal feed product having a shelf life which is longer than 7 days and a physical form which is selected from particulate materials, granular materials, powders flakes and the like.

More particularly, this aspect of the invention provides a method of reducing the rate of microbiological degradation of a wet biological material, the wet biological material being useful in the manufacture of animal feedstuffs and having a shelf life of between about 1 and 7 days and being selected from solutions, suspensions, emulsions, gums, mousses, sludges, slurries, pastes and particulate materials, the method including the step of adding a base to the wet biological material, to produce a product with a shelf life of more than 7 days.

Preferably the product will have a shelf life of more than about 7 days and more particularly of more than 14 days.

The base may be selected from metal oxides, metal hydroxides or metal alkoxides. The metal may be selected from Group 1 A or Group 2A metals and transition metals. Typical metal oxides and hydroxides include calcium oxide, calcium hydroxide, magnesium oxide, magnesium hydroxide, burnt caustic magnesia or mixtures thereof. Preferably, the metal oxide or metal hydroxide will be calcium oxide (quicklime) or calcium hydroxide (hydrated lime) or a mixture of these two substances. The base may instead be a metal alkoxides such as calcium monoglyceroxide, calcium diglyceroxide, a higher order glyceroxide or a mixture of any of these substances and may be in a solid form, such as a powder or granule or in solution. These salts hydrolyse in water to produce hydroxyl and/or glyceroxide ions.

The base may thus be selected from metal oxides, metal hydroxides, metal alkoxides and mixtures thereof and may, in particular, be calcium oxide, a calcium glyceroxide, a mixture of calcium glyceroxides or combinations thereof.

The method may include combining a selected weight of the fermentation residue with between about 0.05% and 50% of its weight of the base. Where the base is the metal oxide, hydroxide, glyceroxide or mixture of metal oxide and/or hydroxide and/or glyceroxide, the weight will preferably be between about 0.5 % and 25 % and more preferably between about 2 % and 15 %.

The amount of base added is a function of the outcome required and will be determined by the physical properties, including the pH of the starting material and the amount of free water present in the stating material. For example, a starting material with a high water content which is in a pourable, liquid state such as an aqueous suspension of yeast in water, and which may, or may not, be prone to degradation through microbial action, would require a larger amount of base in order to cause an exothermic transformation of liquid to preserved solid material. On the other hand, a wet grain-like, fermentation residue which also has a high water content, but in which most of the water is encapsulated within the grains, and in which the initial physical state is thus acceptable, but which is prone to degradation through microbial action and hence requires preservation only as opposed to both physical transformation and preservation would require less base.

The base may thus be selected from metal oxides, metal hydroxides, metal alkoxides and mixtures thereof. In particular, the base may selected from one or more calcium glyceroxides and may be in a form selected from powders, granules, mixtures thereof and solutions.

The method may include the additional step of treating the wet biological material with at least one acid prior to combining the wet biological material with the base. The acid may be as hereinbefore described. The method may also include the additional step of adding a diluent selected from water, an animal feed compatible material and combinations thereof to the wet biological material. The animal feed compatible material is glycerol.

The wet biological material may be selected from yeast cream suspensions, yeast wall suspensions, liquid betaine extracts, pot ale syrups, distillers' grains, yeast protein concentrates, wet gums, wet distillers' solubles and mixtures of any two or more thereof.

Where the base is a metal oxide such as calcium oxide, the weight ratio between the calcium oxide and the wet biological material may be between about 1:1 and 1:10. The weight ratio between the wet biological material and the acid may be between about 1:0 and 1:0,9. The weight ratio between the wet biological material and the acid may between about 1:0 and 1:0,5. Where the animal fed compatible material is glycerol, the weight ratio between the wet biological material and the glycerol may be between about 1:0 and 1:2.

Where the base is a glyceroxide or a mixture of glyceroxides, the weight ratio between the glyceroxide or mixture of calcium glyceroxides and the wet biological material may between about and 1:5 and 1:100.

The purity of the base is not critical to the method of the invention, but less material would be required in the case of purer bases depending on the nature of impurities present. Various factors may affect the amount of base required. These may include, amongst others, the anticipated microbial exposure and conditions such as storage temperature and humidity levels, the purity of the base, the reactivity of the base, the amount of other non-active substances present in the base, the pH of the fermentation residues, the amount of water present in the fermentation residue, the degree of effective exposure of the base to the free water contained in the residue, the particle (grain) size and state of the residue (*e.g.* intact *versus* shredded) and the degree of mixing. In the case of the metal oxides, the reactivity with free water in the fermentation residue will be determined by the purity and the state of division of the metal oxide, the purer and the more finely-divided the material, the more reactive it will be. The calcium oxide used in the method of the invention will typically have a purity of above 75%. Preferably, the purity will be between about 85% and 100% and more preferably between about 90% and 100%.

The method may include the step of optionally removing at least some of the water from the material, either before or after raising the pH by adding the base. The water may be removed by mechanical or chemical means or by a combination of mechanical and chemical means.

For example the water may be removed by compressing the material, for example by squeezing or pressing the material. Alternatively, where the pH of the material is raised by combining the material with a metal oxide or with a combination of a metal oxide and a metal hydroxide, the amount of the metal oxide or the combination of metal oxide and hydroxide may be selected, so that at least some of the water present in the material reacts with the added metal oxide.

Where a relatively small amount of the metal oxide is used, an extended shelf life can be obtained by mechanical removal of water only, for example by squeezing or compressing the material. In this case the exothermic reaction of the metal oxide with the water in the material gives rise to only a slight exotherm, generally to a temperature of not more than a few degrees Celsius. This temperature increase is not sufficient to drive off or evaporate water as steam. Further, because of the relatively small amount of calcium oxide added, only a small amount of the water present in the material is removed. This mild procedure, as opposed to conventional energy-intensive, environmentally unfriendly, nutrient-damaging, heat drying, is an advantage in that the moderate temperature prevents heat degradation of nutrients in the material and also minimises or avoids the Maillard reaction, which is the reaction between amino acids and sugars caused by heat and which can lead to reduction of the sugar level of the treated residue and to the degradation of proteins, thereby reducing nutritional value.

When using a hydroxide or glyceroxide as the base, there is no substantial exothermic reaction with water present in the material. This differs from the case in which the base contains small amounts of oxide. In this case, the oxide reacts with free water to form the corresponding hydroxide and releases an amount of heat which is related to the amount of oxide present. The amount of heat generated is related to the specific amounts of free water and oxide added and the degree of exposure of the oxide to the free water.

Where the base is calcium oxide, the amount of calcium oxide added in the method of the invention is substantially lower than the amount which would be needed to react with all of the water present. Further drying takes place by allowing the treated product to dry naturally or, optionally but not preferably, by incorporating a drying step into the process. It is accordingly not necessary to add a large amount of calcium oxide in order to remove most of the water to produce the treated product. Some water removal occurs at a 2,5-5,0% (weight/weight) dose of calcium oxide through binding of a small portion of the free water, but this is far less than that which results by natural air drying under certain storage conditions such as a warm, dry, well ventilated environment. Because of calcium-level restrictions in downstream products such as animal feedstuffs, the method of the invention generally does not involve reducing the original water content of the fermentation residue to a final moisture level of less than about 10% because of the amount of calcium oxide which would be required.

In the method of the invention, it appears that the anti-microbial effect of the base is more important than drying caused by addition of the base (which contributes in the longer term). It appears that the preservation works in the first place by contacting hydroxyl or alkoxide ions (which need to be in solution to enable interaction) depending on substance added with the microorganisms which results in the destruction of the microorganisms. An important feature of the method of the invention is that the addition of the base provides a reservoir of anions such as hydroxyl ions and/or glyceroxyl ions which have anti-microbial properties. The addition of the base typically raises the pH of the fermentation residue to a value of above pH 12. This produces a hostile environment in which most micro-organisms cannot survive or multiply. It is an also an advantage of the invention that, through the inhibition of fungal growth and/or killing of fungi, the formation of mycotoxins produced by these organisms is inhibited or eliminated. The Applicant believes that the base may also be able to deactivate existing mycotoxins such as fumonisins through chemical interaction with, and destruction of, the toxins. The anions such as hydroxyl and/or glyceroxyl ions have also been shown to kill pathogenic bacteria such as Salmonella abony, Clostridium difficile, Escherichia coli, and the like. This results in additional benefits in terms of animal health. The metal oxides, metal hydroxides and metal glyceroxides can further be combined with each other and with other preservatives and/or mycotoxin binders to produce a synergistic effect between these groups of additives.

The effective biocide-microorganism contact will be reduced when the material is air dried over time through exposure under certain storage conditions, but the air drying could then become a contributing factor in the preservation process leading to a longer shelf life than expected for chemical treatment only. The method may thus include allowing the treated product at least partially to dry.

The calcium hydroxide added or formed during the process is only slightly water soluble (0.185 g/100 ml water at 0°C and 0.167 g/100ml at 20°C). This results in a slow release of hydroxide in the material. Differing amounts of calcium hydroxide extend the residue shelf-life by differing periods. For example, 2.5% (w/w) of calcium oxide powder on a weight/weight basis added to the fermentation residue is sufficient to provide a shelf life of at least 10 days and 10% (w/w) results in a shelf life of at least 63 days.

The product produced by the method of the invention is generally a particulate, fibrous, granular, gum-like, pasty or powdery material.

In preferred embodiments of the invention, the material is selected from yeast cream suspensions, yeast wall suspensions, liquid betaine extracts, pot ale syrups, distillers grains, yeast protein concentrates, wet gums, wet distillers solubles and mixtures of any two or more thereof.

The weight ratio between the calcium oxide and the biological material may be between about 1:1 and 1:10. The weight ratio between the calcium glyceroxide or mixture of calcium glyceroxides and the wet biological material may be between about 1 ;5 and 1;100. The weight ratio between the biological material and the acid may be between about 1:0 and 1 :0,9. The weight ratio between the wet biological material and the acid may be between about 1:0 and 1:0,5. The weight ratio between the wet biological material and the glycerol may be about 1 :0 and 1:2.

Naturally, the specific weight ratios will be determined by the nature of the wet biological material, the pH of the material and the amount of water which is present in the wet biological material or biological by-product.

The invention thus provides a method of using biological materials or by-products such as fermentation residues, in an energy efficient manner, to produce particulate materials which can be used in or as animal feedstuffs.

The invention further provides an animal feed product prepared by a method as herein described.

The invention further provides an animal feedstuff comprising an animal feed product prepared by a method as herein described.

The invention further provides a method of producing an animal feedstuff comprising the step of combining an animal feed product as hereinbefore described with one or more nutrient components.

The Applicant has found that glyceroxides are effective biocidal or sanitising agents. In particular, the Applicant has found that calcium monoglyceroxide, calcium diglyceroxide, higher order glyceroxides or mixtures of any of these substances, in a solid form, such as a powder or granule or in solution such as an aqueous, alcoholic or aqueous alcoholic solution, are active biocidal and sanitising agents. These salts hydrolyse in water to produce hydroxyl and/or glyceroxide ions which have anti-microbial properties.

The invention thus also provides a method of sterilising a substrate or a surface, the method including the step of exposing the substrate to a composition which includes one or more calcium glyceroxides. The composition may include calcium monoglyceroxide, calcium diglyceroxide, a higher glyceroxide and mixtures thereof.

The composition may be in the form of a solution, a suspension or a concentrate. It will preferably be in the form of a solution of the calcium monoglyceroxide, calcium diglyceroxide, higher glyceroxides or mixture thereof in a solvent such as water or ethanol. The concentration will be determined by the application and will typically be between 1% and 100% of the maximum solubility of the solid substance in water at 5 to 25 degrees Celsius. For example the solubility of calcium diglyceroxide is about 8.35 gram per liter (0.037 molar) in water at *ca* 20 degrees Celsius. The concentration of the calcium diglyceroxide in the aqueous liquid formulation could therefore be between 0.05 gram per liter (0.00037 molar) and 5 gram per liter (0.037 molar) at 20 degrees Celsius.

The substrate may be red meat carcasses, chicken carcasses and eggs, fish, animal bedding materials and the like. Generally the substrate material will be sprayed or painted or dipped in a solution of the composition.

Any material used for animal bedding including bedding for poultry, pigs, cattle, calves, horses, goats, sheep can be sterilised using the method of this aspect of the invention. The materials include but are not limited to wood shavings, straw, sawdust, chopped straw, shredded or chopped, dried bio-materials, flax, shredded paper, any shredded chopped or pellet-like material suitable for use as animal bedding or litter.

For example in broiler chicken houses such materials are spread on the house floor to absorb moisture from droppings. Parasites and infectious microorganisms can survive in the litter and spread infection causing welfare problems, as well as mortality and reduced output efficiency for example slower growth and poorer feed conversion. Further, diseased poultry may produce liquid faeces, with the wet litter also leading to welfare problems and causing downgrading of the poultry carcass with resulting financial costs to the producer.

Metal oxides, metal hydroxides and metal alkoxides such as metal glyceroxides and mixtures thereof in either solid form for example powder or granules or in liquid form for example as solutions or suspensions in water or ethanol can be used to sterilise this type of material.

These treatment agents are non-toxic and non-sensitising and do not pose problems when ingested. Due to the slow release of for example calcium diglyceroxide in granule form the treatment agent remains active throughout the whole 6 week life of a typical bedding material. No practical treatments exist because all potential products fall foul of one or more of the above issues.

Fish and fish products such as fishmeal are liable to contamination for example from bird droppings when left in the open for example on ships where these are processed or poor processing practices. The main issue is contamination with Salmonella. Fish and fish products are used as ingredients in animal feed and are prone to microbial degradation which reduces the nutrient value and increases the risk of contamination and leads to infection of farm animals and a possible threat to human health. The treatment options are limited as to what could be used as treatment agents as the products are consumed by either fish or animals that will in turn go for human consumption.

Glycerol-derived materials such as calcium glyceroxides in solid form for the treatment of fishmeal is safe to consume and in addition to the anti-microbial properties thereof add energy and calcium therefore not wasting space in the formulation and potentially enhancing the feed ration formulations.

Metal oxides, metal hydroxides and metal alkoxides such as metal glyceroxides and mixtures thereof in either solid form for example powder or granules or in liquid form for example as solutions or suspensions in water or ethanol can be used for the treatment of fish and fish products.

Pathogenic micro-organisms such as E coli, Salmonella, Campylobacter and Clostridium species are all frequently present on carcasses with clear implications for human health. The main problematic organism per carcass type is typically as follows: pork (Salmonella spp), chicken (Campylobacter spp), beef (Clostridium estertheticum).

Metal oxides, metal hydroxides and metal alkoxides such as metal glyceroxides and mixtures thereof in liquid form for example as solutions or suspensions in water or ethanol can be used for the sterilisation of carcasses.

The invention is now described, by way of example, with reference to the following Examples.

### Example 1

### Yeast cell wall (YCW)

Typical commercially available yeast cell wall (YCW) suspensions were transformed into free-flowing solid products such as powders and granules.The amounts of additional components were kept to the minimum required to maintain acceptable physical properties. The starting material contained at least 86.5% (w/w) water.

The optimal weight ratio of CaO: YCW suspension (with and without prior separation by a gravity and decantation step), to transform the thin suspension into a solid product with suitable physical properties using a minimum amount of metal oxide with and without the inclusion of a pH adjusting agent was determined.

### Method

Two identical cream-coloured yeast cell wall suspensions of 2.5 litres each were transported on ice from Germany to the UK and on receipt marked YCW1 (a) and YCW1 (b), respectively, and refrigerated at -2 degrees Celsius. A fresh sample of YCW1 (a) was analysed independently for calcium, moisture content and pH and the following data obtained:

### YCW1 (a)

* Alkaline Metals in Foodstuffs by AAS
* TM200 Calcium 81 mg/kg
Method Analysis Result Units
TM166 Moisture Content (Karl Fischer) 86.5 % (w/w)
The above value is the mean result of 2 replicate measurements
* pH 3.3

The suspensions slowly separated in the fridge into 2 phases. The (upper) water layer of sample YCW1(a) was removed by decantation, the resulting residue (cream coloured suspension) marked as YCW1(a) DEC and analysed for exact moisture content:

### YCW1(a) DEC

Method Analysis Result Units
TM166 Moisture Content (Karl Fischer) 76.12 % (w/w)
The above value is the mean result of 2 replicate measurements

The initial treatment was carried out on material with the lowest pH and the highest dry matter content, *i.e.* YCW1a DEC as less acid would be needed to acidify (if need be) in order to optimise the exothermic reaction of metal oxide with water. It was also easier to perform the liquid-to-solid transformation when starting with material with the highest dry matter content and the lowest pH.

### Testing the exotherm of yeast cell wall sample YCW1(a) DEC without pH adjustment

### Small-scale Series - General procedure

Sample YCW1(a) DEC (50 g - container shaken well before sample removal) was placed in a 250 ml glass beaker and the cream coloured suspension was stirred with a magnetic stirrer. A commercially available grade of calcium oxide (10-25 g, reactivity of the calcium oxide confirmed directly prior to use) was added to the respective stirred mixtures in one portion.

The temperatures and physical appearances of the reaction mixtures were recorded. The results of this series of small-scale experiments are summarised in Table 1.

**TABLE 1**

| Ca-YCW small scale ratio screening without pH adjustment - relative ratios *versus* product physical state | | | | |
|---|---|---|---|---|
| **Entry** | **CaO (g)** | **YCW1(a) DEC (g)** | **Physical Appearance** | **Max temperature (°C)** |
| 1 | 20 | 50 | Clumpy, cream coloured granules | 45 |
| 2 | 10 | 50 | Creamy, cream-coloured paste | 32 |
| 3 | 15 | 50 | Thick, cream-coloured paste | 39 |
| 4 | 25 | 50 | Cream-coloured powder | 60 |

Moderate exotherms (maximum 60 degrees Celsius after ca 3 minutes following calcium oxide addition) were achieved in this series with the highest amount (25 g) of calcium oxide added giving a cream coloured powder, *i.e.* solidification predominantly achieved through binding of water with calcium oxide (as calcium hydroxide) with limited water loss through evaporation.

The tests were repeated using a range of calcium oxide amounts and with acidification of the starting material suspensions using various phosphoric acid amounts in order to decrease the relative calcium oxide dose and optimally increase the rate and magnitude of the exotherms in order to facilitate additional water removal through evaporation as steam.

### Testing the exotherm of yeast cell wall sample YCW1(a) DEC acidified with phosphoric acid (H₃PO₄)

### Small-scale Series - General procedure

Sample YCW1(a) DEC (50 g - container shaken well before sample removal) was placed in a 250 ml glass beaker and the cream coloured suspension stirred with magnetic stirrer. Phosphoric acid (1.25-10 g, 85% in water (15 M), Sigma-Aldrich) was added to the respective yeast cell wall suspensions and the mixtures stirred with magnetic stirrer for 5 minutes. The mixtures had pH values in the range of ca pH 1-4 (test paper) depending on the amount of acid added in each instance.

A commercially available grade of calcium oxide (10-20 g, reactivity of the calcium oxide confirmed directly prior to use) was added to the respective stirred mixtures in one portion.

The temperatures and physical appearances of the reaction mixtures were recorded. The results of this series of small-scale experiments are summarised in Table 2.

**TABLE 2**

| Ca-YCW small scale ratio screening (phosphoric acid as acidifying agent) - relative ratios *versus* product physical state | | | | | |
|---|---|---|---|---|---|
| **Entry** | **CaO (g)** | **YCW1(a) DEC (g)** | **H₃PO₄ 85% (g)** | **Physical Appearance** | **Max temperature (°C)** |
| 5 | 20 | 50 | 10 | Fine, cream-coloured powder | 98 |
| 6 | 20 | 50 | 5 | Fine, cream-coloured powder | 95 |
| 7 | 20 | 50 | 2.5 | Fine, cream-coloured powder | 73 |
| 8 | 15 | 50 | 5 | Fine, cream-coloured powder | 73 |
| 9 | 15 | 50 | 2.5 | Fine, cream-coloured powder | 58 |
| 10 | 15 | 50 | 1.25 | Clumpy, cream coloured granules | 48 |
| 11 | 12.5 | 50 | 2.5 | Clumpy, cream coloured granules | 50 |
| 12 | 12.5 | 50 | 5 | Cream coloured powder | 64 |
| 13 | 10 | 50 | 2.5 | Cream coloured, paste-like solid | 52 |
| 14 | 10 | 50 | 5 | Clumpy, cream coloured granules | 62 |
| 15 | 10 | 50 | 7.5 | Clumpy, cream coloured granules | 72 |
| 16 | 10 | 50 | 10 | Cream coloured paste | 83 |

The experiment shown in Entry 7 was repeated in a 1-litre glass beaker on 6x scale. This led to the formation of free-flowing powders and granules as shown in Table 3.

**TABLE 3**

| Ca-YCW (6x scale) - relative ratios *versus* product physical state | | | | | |
|---|---|---|---|---|---|
| **Entry** | **CaO (g)** | **YCW1(a) DEC (g)** | **H₃PO₄ 85% (g)** | **Physical Appearance** | **Max temperature (°C)** |
| 17 | 120 | 300 | 15 | Cream coloured powder sieved as follows: | 99 |
| | | | | Fraction A = fine powder (<1 mm) | |
| | | | | Fraction B = granules (1-2.36 mm) Fraction C = large granules (>1.36 mm) | |

A series of small-scale experiments was subsequently performed using yeast cell wall suspension YCW1(b) without a prior decantation step in order to ascertain whether this material (water content 86.5 %) could also be efficiently transformed into solid materials of suitable physical state and, if so, how the reaction time and analytical data of the resulting product(s) would compare to the products made from residual material (water content 76.12 %) subjected to a separation-decantation step.

### Testing the exotherm of (as received) yeast cell wall sample YCW1(b) without and with acidification using phosphoric acid (H₃PO₄)

### Small-scale Series - General procedure

Sample YCW1(b) (50 g - container shaken well before sample removal, pH 3.3) was placed in a 250 ml glass beaker and the cream coloured suspension stirred with magnetic stirrer. Phosphoric acid (0 - 7.5 g, 85% in water (15 M), Sigma-Aldrich) was added to the respective yeast cell wall suspensions and the mixtures stirred with magnetic stirrer for 5 minutes. The mixtures had pH values in the range of ca pH 1-4 (test paper) depending on the amount of acid added in each instance.

A commercially available grade of calcium oxide (15 - 25 g, reactivity of the calcium oxide confirmed directly prior to use) was added to the respective stirred mixtures in one portion.

The temperatures and physical appearances of the reaction mixtures were recorded. The results of this series of small-scale experiments are shown in Table 4.

**TABLE 4**

| Ca-YCW small scale ratio screening (phosphoric acid as acidifying agent, no prior decantation) - relative ratios *versus* product physical state | | | | | |
|---|---|---|---|---|---|
| **Entry** | **CaO (g)** | **YCW1(b) DEC (g)** | **H₃PO₄ 85% (g)** | **Physical Appearance** | **Max temperature (°C)** |
| 18 | 25 | 50 | 0 | Cream coloured powder | 63 |
| 19 | 20 | 50 | 0 | Cream coloured, putty-like paste | 59 |
| 20 | 20 | 50 | 5 | Fine, cream coloured powder | 81 |
| 21 | 20 | 50 | 2.5 | Cream coloured, paste-like solid, clumpy granules and powder on cooling | 66 |
| 22 | 17.5 | 50 | 5 | Cream coloured powder | 73 |
| 23 | 17.5 | 50 | 2.5 | Cream coloured, clumpy powder/granules | 54 |
| 24 | 15 | 50 | 5 | Cream coloured, paste-like, clumpy solid | 65 |
| 25 | 15 | 50 | 7.5 | Cream coloured, putty-like, clumpy solid | 81 |

The analytical data obtained for selected products depicted in Tables 1 - 4 are shown in Table 5.

**TABLE 5**

| Analytical data for solid products shown in Tables 1-4 | | | | | | |
|---|---|---|---|---|---|---|
| **Entry** | **H₂O % (w/w) (Karl Fischer)*** | **Ca % (w/w) (AAS)** | **P % (w/w) (ICP-MS)** | **YCW % (w/w) ***** | **pH 1 % (w/w) in dist water** | **X-ray Diffraction (XRD) of Solid Phase**** |
| 4 | 61.74 | 28.3 | - | - | 12.8 | - |
| | | (calc 24.44) | (no P added) | (calc 16.98) | | |
| 9 | 61.51 | 17.8 | - | - | 12.8 | - |
| | | (calc 15.94) | (calc 1.04) | (calc 18.46) | | |
| 12 | 60.52 | 15.3 | | | 12.7 | - |
| | | (calc 13.34) | (calc 2.08) | (calc 18.54) | | |
| 17 | 55.64 | 20.0 | 1.49 | - | 12.2 | Mainly Portlandite (Ca(OH)₂). Traces of Calcite (CaCO₃) from starting material calcium oxide). |
| | | (calc 20.27) | (calc 0.99) | (calc 17.59) | | |
| 18 | 56.98 | 28.4 | - | - | 12.8 | - |
| | | (calc 25.23) | (no P added) | (calc 9.91) | | |
| 20 | 57.66 | 23.3 | - | - | 12.9 | - |
| | | (calc 19.76) | (calc 1.93) | (calc 9.70) | | |
| 22 | 64.24 | 19.7 | - | - | 12.8 | - |
| | | (calc 17.93) | (calc 1.99) | (calc 10.06) | | |

Calculated values are shown in brackets. Calculations were based on actual product weights. Trace levels of calcium and phosphorous in starting materials were ignored in calculations. Calculation of theoretical moisture contents was not possible as the amount of water that evaporated as steam in each instance was unknown.
* Mean result of 3 replicate measurements.
** Analysed at an independent Dutch laboratory
***Based on dry matter content respective starting materials, *i.e.* (100-water content) % (w/w)

### Results and Conclusions

Yeast cell wall suspensions with (YCW1(a) DEC) and without (YCW1(b)) a prior decantation step could be quickly and successfully transformed into free-flowing powders and granules using 85% aqueous phosphoric acid as acidifying agent prior to calcium oxide addition. When using YCW1(a) DEC, *i.e.* YCW1(a) with prior removal of a portion (10.4%) of the water through a separation-decantation step, calcium oxide : suspension : phosphoric acid weight ratios in the order of 20 : 50 : (2.5 - 10) gave fast reactions with liquid-to-solid transformation times of less than 1 minute (compared to ca 2 minutes without acidification and using 25 g calcium oxide) on the 50 gram scale and ca 1 minute on the 300 gram scale from the point of calcium oxide addition.

When using YCW1(b) *i.e.* without prior removal of a portion (10.4%) of the water through a separation-decantation step, calcium oxide : suspension : phosphoric acid ratios in the order of (17.5-20) : 50 : (2.5-5) gave fast reactions on the 50 gram scale with longer liquid-to-solid transformation times of 1.5 - 4 minutes (compared to ca 6 minutes without acidification and using 25 g calcium oxide).

Fungal growth occurred over time on the surface of an untreated YCW1(a) sample which was left outside the fridge and exposed to the atmosphere at room temperature. In comparison, no fungal growth occurred in the case of transformed materials kept under identical conditions. The Applicant believes that the treated materials are self-sterilising as the result of their calcium hydroxide content with the hydroxyl ion acting as anti-microbial agent.

### Example 2

### Yeast Protein Concentrate

A typical commercially available yeast protein concentrate (YPC) suspension was transformed into free-flowing solid products such as powders or granules.The amounts of additional components were kept to the minimum required to maintain acceptable physical properties. The starting material contained more than 90 % (w/w) water.

The optimal weight ratio of CaO: YPC suspension (with and without prior separation by gravity and decantation step), to transform the thin suspension into a solid product with suitable physical properties using a minimum amount of metal oxide with and without the inclusion of a pH adjusting agent was determined.A mixture of YPC suspension and wet glycerol was transformed into a solid product with suitable physical properties using a minimum amount of metal oxide with or without the inclusion of a pH adjusting agent.

### Method

Two fresh yeast cream concentrate samples (YPC1 and YPC2) of *ca* 5 litres each were refrigerated at ca -2 degrees Celsius. Fresh samples of these materials were analysed independently for calcium, moisture content and pH and the following data obtained:

### YPC1

Method Analysis Result Units
* TM41 pH 3.4
TM166 Moisture Content (Karl Fischer) 91.27 % (w/w)
The above value is the mean result of 2 replicate measurements
* Alkaline Metals in Foodstuffs by AAS
* TM200 Calcium 0.194 g/kg
* Metals by ICP-MS

### Sample YPC2

Method Analysis Result Units
* TM41 pH 6.2
TM166 Moisture Content (Karl Fischer) 90.71 % (w/w)
The above value is the mean result of 2 replicate measurements

### Testing the exotherm of yeast protein concentrate sample YPC1 without pH adjustment

The treatment of YPC1 (150 gram, pH 3.4) with a commercially available grade of calcium oxide (30 gram, reactivity of the calcium oxide confirmed directly prior to use) resulted in a very small exotherm of ca 1.5 degrees Celsius which was not sufficient to transform the suspension into a solid material. A light brown cream formed.

### Testing the exotherm of yeast protein concentrate sample YPC2 without pH adjustment

The treatment of YPC2 (150 gram, pH 6.9) with a commercially available grade of calcium oxide (30 gram, reactivity of the calcium oxide confirmed directly prior to use) resulted in a small exotherm of ca 11 degrees Celsius which was not sufficient to facilitate transform the suspension into a solid material. A light brown cream with formed.

### Testing the exotherm of yeast protein concentrate sample YPC1 acidified with phosphoric acid (H₃PO₄)

### Small-scale Series - General procedure

Sample YPC 1 (50 g - container shaken well before sample removal, pH 3.4) was placed in a 250 ml glass beaker and the cream coloured suspension stirred with a magnetic stirrer. Phosphoric acid (5-30 g, 85% in water (15 M), Sigma-Aldrich) was added to the respective yeast cell wall suspensions and the mixtures stirred with magnetic stirrer for 5 minutes. All the mixtures had a pH of ca 1 (test paper). A commercially available grade of calcium oxide (10-30 g, reactivity of the calcium oxide confirmed directly prior to use) was added to the respective stirred mixtures in one portion. The temperatures and physical appearances of the reaction mixtures were recorded. The results of this series of small-scale experiments are summarised in Table 6.

**TABLE 6:**

| Ca-YPC small scale ratio screening - relative ratios *versus* product physical state | | | | | |
|---|---|---|---|---|---|
| **Entry** | **CaO (g)** | **YPC1 (g)** | **H₃PO₄ 85% (g)** | **Physical Appearance** | **Max temperature (°C)*** |
| 1 | 10 | 50 | 5 | Suspension | 51 |
| 2 | 10 | 50 | 10 | Cream/paste | 79 |
| 3 | 10 | 50 | 20 | Suspension | 89 |
| 4 | 15 | 50 | 5 | Paste | 59 |
| 5 | 15 | 50 | 10 | Paste | 93 |
| 6 | 15 | 50 | 15 | Paste | 96 |
| 7 | 20 | 50 | 5 | Paste/putty | 87 |
| 8 | 20 | 50 | 10 | Rubbery granules | 98 |
| 9 | 20 | 50 | 15 | Cream coloured powder | 99.6 |
| 10 | 20 | 50 | 20 | Paste | 99.7 |
| 11 | 20 | 50 | 30 | Paste | >100 |
| 12 | 25 | 50 | 5 | Powder (delayed exotherm) | 93 |
| 13 | 25 | 50 | 10 | Cream coloured powder | 99.9 |
| 14 | 25 | 50 | 15 | Cream coloured powder | 99.9 |
| 15 | 25 | 50 | 20 | Cream coloured powder | 99.6 |
| 16 | 25 | 50 | 25 | Cream coloured powder | 99.8 |
| 17 | 25 | 50 | 30 | Cream coloured powder | >100 |
| 18 | 30 | 50 | 10 | Cream coloured powder | 98 |
| 19 | 30 | 50 | 15 | Cream coloured powder | 99.9 |
| 20 | 30 | 50 | 30 | Cream coloured powder | >100 |

| | | | | | |
|---|---|---|---|---|---|
| *Maximum temperature probe reading = 100 °C | | | | | |

The experiment shown in Entry 13 was repeated in a food mixer on 6x scale to give a solid, powdery material in less than 1 minute. The results of this experiment leading to the formation of free-flowing powders and granules are shown in Table 7.

**TABLE 7**

| Ca-YPC (6x scale) - relative ratios *versus* product physical state | | | | |
|---|---|---|---|---|
| **Entry** | **CaO (g)** | **YPC1 (g)** | **H₃PO₄ 85% (g)** | **Physical Appearance** |
| 21 | 150 | 300 | 60 | Cream coloured powder, sieved as follows: |
| | | | | |
| | | | | Fraction A) = fine powder (<1 mm) |
| | | | | Fraction B) = granules (1-2.36 mm) |
| | | | | Fraction C = large granules (>1.36 mm) |

The analytical data obtained for each of the product powders and granules shown in Tables 6 and 7 are summarised in Table 8.

**TABLE 8**

| Analytical data for solid products shown in Tables 6 & 7 | | | | | |
|---|---|---|---|---|---|
| **Entry** | **H₂O* % (w/w)(Karl Fischer-Lab A)(105°C/ 2h-Lab B)** | **Ca % (w/w)(AAS)** | **P % (w/w)(ICP-MS** - **Lab A)(AAS - Lab B)** | **YPC % (w/w)**** | **pH 1 % (w/w) in dist water** |
| 9 | 57.24 (Lab A) | 26.9 (Lab A) | 3.96 (Lab A) | - | 11.6 |
| | | | | | |
| | 47.4 (Lab B) | 18.4 (Lab B) | 5.70 (Lab B) | - | |
| | | | | | |
| | | (calc 17.76) | (calc 5.20) | (calc 5.64) | |
| 12 | 57.38 (Lab A) | 36.5 (Lab A) | 2.14 (Lab A) | - | 11.6 |
| | | | | | |
| | | (calc 23.97) | (calc 1.87) | (calc 6.09) | |
| 13 | 61.27 (Lab A) | 32.1 (Lab A) | 9.90 (Lab A) | - | 11.5 |
| | | | | | |
| | 45.8 | 22.5 | 3.70 | - | |
| | (Lab B) | (Lab B) | (Lab B) | | |
| | | | | | |
| | | (calc 22.48) | (calc 3.51) | (calc 5.71) | |
| 14 | 52.42 (Lab A) | 32.0 (Lab A) | 5.85 (Lab A) | - | 11.5 |
| | | | | | |
| | | (calc 21.31) | (calc 5.00) | (calc 5.41) | |
| 15 | 47.68 (Lab A) | 28.4 (Lab A) | 5.71 (Lab A) | - | 11.5 |
| | | | | | |
| | | (calc 20.52) | (calc 6.41) | (calc 5.21) | |
| 16 | 44.40 (Lab A) | 26.3 (Lab A) | 7.25 (Lab A) | - | 11.4 |
| | | | | | |
| | 40.3 (Lab B) | 19.3 (Lab B) | 8.2 (Lab B) | - | |
| | | | | | |
| | | (calc 19.86) | (calc 7.76) | (calc 5.04) | |
| 17 | 40.03 (Lab A) | 24.5 (Lab A) | 2.14 (Lab A) | - | 11.2 |
| | | | | | |
| | | (calc 19.33) | (calc 9.06) | (calc 4.91) | |
| 18 | 52.68 (Lab A) | 39.9 (Lab A) | 5.37 (Lab A) | - | 11.4 |
| | | | | | |
| | | (calc -)*** | (calc -)*** | (calc -)*** | |
| 19 | 49.63 (Lab A) | 37.1 (Lab A) | 8.68 (Lab A) | - | 11.5 |
| | | (calc 24.86) | (calc 4.86) | (calc 5.26) | |
| 20 | 40.08 (Lab A) | 28.7 (Lab A) | 10.06 (Lab A) | | 11.5 |
| | | | | | |
| | | (calc 22.37) | (calc 8.74) | (calc 4.37) | |
| 21 | 56.79 (Lab A) | 28.8 (Lab A) | 3.99 (Lab A) | - | 11.4 |
| | | | | | |
| | 42.5 (Lab B) | 22.8 (Lab B) | 3.90 (Lab B) | - | |
| | | | | | |
| | | (calc 23.43) | (calc 3.66) | (calc 5.95) | |

Calculated values are shown in brackets. Calculations were based on actual product weights. Trace levels of calcium and phosphorous in the starting materials were ignored in the calculations. Calculation of theoretical moisture contents was not possible as the amount of water that evaporated as steam in each instance was unknown.
* Mean result of 3 replicate measurements.
**Based on dry matter content of 8.73 % (w/w) of starting material, *i.e.* 100-water content of 91.27 % (w/w)
***Product weight unknown

### Testing the exotherm of a mixture of yeast protein concentrate sample YPC1 and wet glycerol acidified with phosphoric acid (H₃PO₄)

### Small-scale Series - General procedure

A series of small scale experiments which included glycerol in the formulations was subsequently performed. A stock suspension of yeast protein concentrate (YPC1) in a 1:1 ratio with pharmaceutical grade glycerol blended with ca 9% (w/w) water was prepared and 50 gram portions of the stock solution were acidified with phosphoric acid (85% in water (15 M), Sigma-Aldrich) followed by reaction with a commercial grade of calcium oxide in various ratios.

The results of these experiments are summarised in Table 9.

**TABLE 9:**

| Glycerol-Ca-YPC small scale ratio screening - relative ratios *versus* product physical state | | | | | | |
|---|---|---|---|---|---|---|
| **Entry** | **CaO (g)** | **YPC1 (g)** | **H₃PO₄ 85% (g)** | **Glycerol/water 91:9 (w/w) (g)** | **Physical Appearance** | **Max temperature (°C)*** |
| 22 | 15 | 25 | 10 | 25 | Suspension | 73 |
| 23 | 20 | 25 | 10 | 25 | Suspension | 79 |
| 24 | 20 | 25 | 15 | 25 | Paste | >100 |
| 25 | 20 | 25 | 20 | 25 | Paste | >100 |
| 26 | 25 | 25 | 10 | 25 | Clumpy, putty-like | >100 |
| 27 | 25 | 25 | 15 | 25 | Clumpy, putty-like | >100 |
| 28 | 25 | 25 | 20 | 25 | Cream coloured powder | >100 |
| 29 | 25 | 25 | 25 | 25 | Cream coloured powder | >100 |
| 30 | 25 | 25 | 30 | 25 | Cream coloured powder | >100 |

| | | | | | | |
|---|---|---|---|---|---|---|
| *Maximum temperature probe reading = 100 °C | | | | | | |

The experiment shown in Entry 28 was repeated in a food mixer on 6x scale to give a solid, powdery material in less than 1 minute. The product was a free-flowing powder or granules as shown in Table 10.

**TABLE 10**

| Ca-YPC (6x scale) - relative ratios *versus* product physical state | | | | | |
|---|---|---|---|---|---|
| **Entry** | **CaO (g)** | **YPC1 (g)** | **H₃PO₄ 85% (g)** | **Glycerol/ water 91:9 (w/w) (g)** | **Physical Appearance** |
| 31 | 150 | 150 | 120 | 150 | Cream coloured powder, sieved as follows: |
| | | | | | |
| | | | | | Fraction A = fine powder (<1 mm) |
| | | | | | Fraction B = granules (1-2.36 mm) |
| | | | | | Fraction C = large granules (>1.36 mm) |

The analytical data obtained for each of the product powders and granules shown in Tables 9 and 10 are summarised in Table 11.

**TABLE 11**

| Analytical data for solid products shown in Tables 9 &10 | | | | | | | |
|---|---|---|---|---|---|---|---|
| **Entry** | **Glycerol % (w/w)** | **H₂O* % (w/w)** | **Ca % (w/w)** | **P % (w/w)** | **YPC %** | **pH 1 %** | **X-ray Diffraction Analysis** |
| | **(HPLC)** | **(Karl Fischer -Lab A) (105°C/ 2h -Lab B)** | **(AAS)** | **(ICP-MS- Lab A) (AAS-Lab B)** | **(w/w) **** | **(w/w) in dist water** | **(XRD) of solid phase** |
| 28 | 24.5 (Lab A) | 29.23 (Lab A) | 27.0 (Lab A) | 10.72 (Lab A) | | 11.6 | Mainly Monetite (calcium hydrogen phosphate), with traces of Portlandite (Ca(OH)₂). No traces of any calcium glyceroxide. |
| | | | | | | | |
| | - | 22.2 (Lab B) | 18.9 (Lab B) | 7.0 (Lab B) | - | | |
| | | | | | | | |
| | (calc 27.31) | | (calc 20.74) | (calc 6.45)** | (calc 2.63) | | |
| 29 | 25.0 (Lab A) | 27.69 (Lab A) | 26.4 (Lab A) | 9.44 (Lab A) | - | 11.6 | Mainly of Monetite (calcium hydrogen phosphate), with traces of Portlandite (Ca(OH)₂). No traces of any calcium glyceroxide. |
| | | | | | | | |
| | - | 21.6 (Lab B) | 20.1 (Lab B) | 8.1 (Lab B) | - | | |
| | | | | | | | |
| | (calc 25.72) | | (calc 19.43) | (calc 7.59)** | (calc 2.47) | | |
| 30 | 23.5 (Lab A) | 24.21 (Lab A) | 22.8 (Lab A) | 6.47 (Lab A) | - | 11.4 | Single phase Monetite (calcium hydrogen phosphate).No traces of other phases. |
| | | | | | | | |
| | - | 21.4 (Lab B) | 17.7 (Lab B) | 9.8 (Lab B) | - | | |
| | | | | | | | |
| | (calc 24.93) | | (calc 18,84) | (calc 8.83)** | (calc 2.39) | | |
| 31 | 23.1 (Lab A) | 24.70 (Lab A) | 21.6 (Lab A) | 3.99 (Lab A) | - | 11.5 | Mainly Monetite (calcium hydrogen phosphate), with traces of Portlandite |
| | | | | | | | |
| | - | 18.8 | 18.8 | 7.9 | - | | |
| | | (Lab B) | (Lab B) | (Lab B) | | | (Ca(OH)₂). No traces of any calcium glyceroxide. |
| | | | | | | | |
| | (calc 28.86) | | (calc 21.80) | (calc 6.81)** | (calc 2.76) | | |

Calculated values are shown in brackets. Calculations were based on actual product weight. Trace levels of calcium and phosphorous in the starting materials were ignored in the calculations. Calculation of theoretical moisture contents was not possible as the amount of water that evaporated as steam in each instance was unknown.
* Mean result of 3 replicate measurements.
**Based on dry matter content of 8.73 % (w/w) of starting material, *i.e.* 100-water content of 91.27 % (w/w).

### Results and Conclusions

Yeast protein concentrate suspension YPC1 was quickly and successfully transformed on small scale into free-flowing powders and granules using 85% aqueous phosphoric acid as acidifying agent prior to calcium oxide addition. Calcium oxide : YPC suspension : phosphoric acid weight ratios in the order of (20-30) : 50 : (5 - 30) gave fast reactions with typical liquid-to-solid transformation times of 30 seconds to less than one minute on the 50 gram YPC scale and less than one minute on the 300 gram YPC scale from the point of calcium oxide addition.

Mixtures of yeast protein concentrate suspension YPC1 in a 1:1 ratio with pharmaceutical grade glycerol blended with ca 9% (w/w) water was quickly and successfully transformed on small scale into free-flowing powders and granules using 85% aqueous phosphoric acid as acidifying agent prior to calcium oxide addition. Calcium oxide : YPC suspension : phosphoric acid : wet glycerol weight ratios in the order of 25 : 25 : (20 - 30) : 25 gave fast reactions with typical liquid-to-solid transformation times of 30 seconds to less than one minute 25 gram YPC scale and less than one minute on the 150 gram YPC scale from the point of calcium oxide addition.

### Example 3

### Liquid Betaine

A commercially available liquid betaine (trimethyl glycine) was transformed into free-flowing solid products such as powders or granules by subjecting the betaine solution to an exothermic liquid-to-solid transformation process. The levels of additional components were kept to a minimum sufficient to maintain acceptable physical properties.

The optimal weight ratio of CaO: Betaine liquid, to transform the liquid into a solid product with suitable physical properties using a minimum amount of calcium oxide with and without pH adjusting agent was determined.

### Method

A commercially available liquid betaine sample of 5 litres (thin, chocolate brown coloured liquid) was marked BET1 on receipt and stored at room temperature. A fresh sample of BET1 was analysed independently for calcium, moisture and betaine content and pH and the following data obtained:

### BET1

* Alkaline Metals in Foodstuffs by AAS
* TM200 Calcium <10 mg/kg
Method Analysis Result Units
TM166 Moisture Content (Karl Fischer) 45.1 % (w/w)
The above value is the mean result of 2 replicate measurements
* pH 8.6
* Betaine content 47.7 % (w/w) (HPLC) - (Spec: min. 47%)

### Testing the exotherm of liquid betaine sample BET1 without pH adjustment

Liquid Betaine (BET1, 50 g, container shaken well before sample removal, pH 8.6) was placed in a 250 ml glass beaker and the solution stirred with a magnetic stirrer. A commercially available grade of calcium oxide (25 g, reactivity of the calcium oxide confirmed directly prior to use) was added to the stirred suspension in one portion.

A small exotherm of ca 5.5 degrees Celsius, giving a cream coloured suspension, and no liquid to solid transformation took place without pH adjustment of the starting material solution at pH 8.6. The alkaline betaine solution was then acidified prior to calcium oxide addition in order to enable an exotherm sufficient to facilitate liquid-to-solid transformation.

### Testing the exotherm of liquid betaine sample BET1) acidified with phosphoric acid H₃PO₄

### Small-scale Series - General procedure

Liquid Betaine (BET1, 50 g, container shaken well before sample removal, pH 8.6) was placed in a 250 ml glass beaker and stirred with a magnetic stirrer. Phosphoric acid (5-25 g, 85% in water (15 M), Sigma-Aldrich) was added to the respective betaine solutions and the mixtures stirred with a magnetic stirrer for 5 minutes (pH ca 1-5 depending on amount of acid added). A commercially available grade of calcium oxide (10-25 g, reactivity of the calcium oxide confirmed directly prior to use) was added to the respective stirred mixtures in one portion. The temperatures and physical appearances of the reaction mixtures were recorded. The results of this series of small-scale experiments are summarised in Table 12.

**TABLE 12**

| Ca-BET small scale ratio screening (phosphoric acid as acidifying agent) - relative ratios *versus* product physical state | | | | | |
|---|---|---|---|---|---|
| **Entry** | **CaO (g)** | **BET1 (g)** | **H₃PO₄ 85% (g)** | **Physical Appearance** | **Max temperature (°C)*** |
| 1 | 25 | 50 | 25 | Light brown paste | >100 |
| 2 | 25 | 50 | 15 | Brown paste | >100 |
| 3 | 25 | 50 | 10 | Fine, light brown powder | >100 |
| 4 | 25 | 50 | 5 | Brown, putty-like solid | 93 |
| 5 | 20 | 50 | 10 | Thick light-brown paste | >100 |
| 6 | 20 | 50 | 15 | Thin brown paste | >100 |
| 7 | 20 | 50 | 5 | Brown suspension | 70 |
| 8 | 20 | 50 | 20 | Thin brown paste | >100 |
| 9 | 15 | 50 | 15 | Thick brown suspension | >100 |
| 10 | 15 | 50 | 10 | Brown paste/cream-like | >100 |
| 11 | 15 | 50 | 5 | Brown suspension | 69 |
| 12 | 30 | 50 | 20 | Brown, putty-like substance | >100 |
| 13 | 30 | 50 | 15 | Brown powder | >100 |
| 14 | 30 | 50 | 10 | Fine, light brown powder | >100 |
| 15 | 22.5 | 50 | 10 | Brown, putty-like solid | >100 |
| 16 | 30 | 50 | 5 | Brown powder with sticky bits | >100 |
| 17 | 20 | 50 | 5 | Brown suspension | >100 |
| 18 | 22.5 | 50 | 7.5 | Brown, putty-like solid | >100 |

| | | | | | |
|---|---|---|---|---|---|
| *Maximum temperature probe reading = 100 °C | | | | | |

The experiment shown in Entries 3 and 14 were repeated in 1-litre glass beakers on 6x scale to give a solid, powdery material in less than 1 minute. The results of this experiment leading to the formation of free-flowing powders and granules are shown in Table 13.

**TABLE 13**

| Ca-BET (6x scale) - relative ratios *versus* product physical state | | | | | |
|---|---|---|---|---|---|
| **Entry** | **CaO (g)** | **BET1 (g)** | **H₃PO₄ 85% (g)** | **Physical Appearance** | **Max temperature (°C)*** |
| 19 | 150 | 300 | 60 | Brown powder | >100 |
| 20 | 180 | 300 | 60 | Fine, light brown powder, sieved as follows: | >100 |
| | | | | | |
| | | | | Fraction A= fine powder (<1 mm) | |
| | | | | Fraction B = granules (1-2.36 mm) | |
| | | | | Fraction C = large granules (>1.36 mm) | |

| | | | | | |
|---|---|---|---|---|---|
| *Maximum temperature probe reading = 100 °C | | | | | |

The analytical data obtained for the powdery and granular products depicted in Tables 12 & 13 are shown in Table 14.

**TABLE 14**

| Analytical data for solid products shown in Tables 12 & 13 | | | | | | |
|---|---|---|---|---|---|---|
| **Entry** | **H₂O*% (w/w)(Karl Fischer-Lab A)*(105°C/ 2h-Lab B)** | **Ca% (w/w)(AAS)** | **P% (w/w)(ICP-MS - Lab A)(AAS-Lab B)** | **Betaine% (w/w)(HPLC)** | **pH1 % (w/w)in dist water** | **X-ray Diffraction (XRD) of Solid Phase**** |
| 3 | 29.81 ((Lab A) | 29.5 (Lab A) | - | - | 12.5 | Mainly Portlandite (Ca(OH)₂) and Betaine (C₅H₁₁NO₂). Traces of Calcite (CaCO₃). No other phases such as calcium phosphate(s) detected*** |
| | | | | | | |
| | 19.6 (Lab B) | 19.6 (Lab B) | 3.60 (Lab B) | - | | |
| | | | | | | |
| | | (calc 23.31) | (calc 3.65) | (calc min. 31.87) | | |
| 13 | 29.99 (Lab A) | 32.3 (Lab A) | - | - | 12.5 | - |
| | | | | | | |
| | | (calc 24.48) | (calc 4.78) | (calc min. 27.88) | | |
| 14 | 33.30 (Lab A) | 33.8 (Lab A) | - | - | 12.5 | Mainly Portlandite (Ca(OH)₂) and Betaine (C₅H₁₁NO₂). Traces of Calcite (CaCO₃). No other phases such as calcium phosphate(s) detected*** |
| | | | | | | |
| | | (calc 25.65) | (calc 3.34) | (calc min. 29.21) | | |
| 16 | 33.99 (Lab A) | 33.2 (Lab A) | - | - | 12.5 | - |
| | | | | | | |
| | | (calc 27.31) | (calc 1.77) | (calc min 31.11) | | |
| 19 | 27.33 (Lab A) | 32.5 (Lab A) | - | - | 12.5 | - |
| | | | | | | |
| | | (calc 23.26) | (calc 3.64) | (calc min. 31.81) | | |
| 20 | 31.25 (Lab A) | 33.7 (Lab A) | - | 30.0 (Lab A) | 12.5 | - |
| | | | | | | |
| | | (calc 26.62) | (calc 3.47) | calc 30.33) | | |

Calculated values are shown in brackets. Calculations were based on actual product weight. Trace levels of calcium and phosphorous in the starting materials were ignored in the calculations. Calculations of theoretical moisture contents were not possible as the amount of water that evaporated as steam in each instance was unknown.
* Mean result of 3 replicate measurements.
** Analysed at an independent Dutch laboratory
*** It was found that product powders ACV128 and ACV 135 have almost identical diffraction patterns - the samples contain calcium hydroxide and betaine as major phases, with traces of calcium carbonate CaCO₃ (which originated from the calcium oxide starting material). The expected small amounts of calcium phosphate(s) had not been observed. This is because these are amorphous in the samples and therefore not detectable by XRD. XRD can only detect the long range order of crystallised materials. Most of the Ca(OH)₂ reflections in the pattern were very broad, indicating that the crystallite size was in the range of 10-30 nm. The peak width of the CaCO₃ and the Betaine indicated that their crystallite size was in the range of 1000 nm or larger. The betaine crystalline structure is such that 4 molecules fit into one unit cell. If an atom such as Ca or a molecular group such as a phosphate would have to fit into the unit cell, two things can happen. One is a simple change in size of the unit cell. This happens when a small modification of the unit cell takes place, for example the exchange of Ca for Ba or Sr in a structure. The result would be a change in the lattice parameters of the unit cell and thus a change in peak position. The amount of change depends on the size and amount of the included/exchanged atom. In the second case a large modification takes place in the unit cell. This is the more likely scenario. In this case a large calcium ion or a phosphate group has to fit into the unit cell, where there was previously none. This implies a rearrangement of the various atom groups in the unit cell, resulting in an entirely different ordering, a different structure (possibly amorphous) and thus a fully different diffraction pattern. Therefore it is unlikely that a crystalline betaine-phosphate of calcium-betaine is formed and it therefore appears that the phase detected was just betaine.

### Results and Conclusions

Liquid betaine BET1 was quickly and successfully transformed into solid materials of suitable physical state, *i.e.* free-flowing powders and granules by using 85% aqueous phosphoric acid as an acidifying agent prior to calcium oxide addition and with calcium oxide : liquid betaine (BET1) : phosphoric acid ratios of 25:50:10 (lowest calcium oxide amount, optimal ratio tested), 30:50:10 and 30:50:15. The liquid to solid transformation times were typically in the order of 30-40 seconds on a 50 gram liquid betaine scale and 40-60 seconds on a 300 gram liquid betaine scale from the point of calcium oxide addition in one portion to the acidified betaine suspensions which contained fine crystals in suspension.

The crystallisation of betaine as betaine hydrochloride (Betaine-HCl) from a dilute aqueous solution is expensive and time-consuming. The rapid exothermic liquid-to-solid transformation process of the method of the invention using a metal oxide such as calcium oxide, with or without prior pH adjustment of the starting material liquid, is thus a cost saving alternative to crystallization in producing a solid betaine product which is easier and more economical to handle, store and transport than the liquid product.

### Example 4

### Pot Ale Syrup

Pot Ale Syrup (PAS), a black, viscous liquid was transformed, with or without the inclusion of glycerol, respectively, into solid materials such as powders or granules by subjecting the crude, viscous, wet material to the exothermic transformation process of the invention. The relative levels of additional components were kept to a minimum and an optimal ratio of PAS to additional components was established, whilst still maintaining acceptable physical properties, in order to meet application criteria.

### Method

A commercially available pot ale syrup (PAS) sample of 10 litres (chocolate brown coloured, pourable thick liquid) was marked PAS1 on receipt and stored at room temperature. Fermentation gas built up and was released periodically. A fresh sample of PAS1 was analysed independently for calcium, moisture content and pH and the following data obtained:

### PAS1

* Alkaline Metals in Foodstuffs by AAS
* TM200 Calcium 0.348 g/kg (0.0348 % w/w)
* Metals by ICP-MS
Method Analysis Result Units
* TM41 pH 4.1
TM166 Moisture Content (Karl Fischer) 52.22 % (w/w)
The above value is the mean result of 2 replicate measurements
*The following analyses were subcontracted to UKAS accredited laboratory No 1282*
Method Analysis Result Units
* SUBCON Protein (N x 6.25) 13.0 g/100g (13.0 % w/w)

### Testing the exotherm of pot ale syrup sample PAS1 without pH adjustment

Pot ale syrup (PAS1, 50 g, container shaken well before sample removal, pH 4.1) was placed in a 250 ml glass beaker and the thick liquid stirred with a magnetic stirrer. A commercially available grade of calcium oxide (25 g, reactivity of the calcium oxide confirmed directly prior to use) was added to the stirred liquid in one portion. A moderate, slow exotherm of ca 63.5 degrees Celsius was produced with the formation of a clumpy, putty-like solid product, *i.e.* with non-ideal physical properties. The solid product was broken with a spatula into slightly sticky, brown granules which had an unpleasant, sweet smell.

The starting material (PAS1) was then acidified with 85% phosphoric acid and the effect on small scale of a range of CaO : Phosphoric Acid : PAS1 ratios on the rate and magnitude of the exotherm and the physical properties of the resulting product was measured.

### Testing the exotherm of pot ale syrup sample PAS1 acidified with phosphoric acid H₃PO₄

### Small-scale Series - General procedure

Pot ale syrup (PAS1, 50 g, container shaken well before sample removal, pH 4.1) was placed in a 250 ml glass beaker and stirred with a magnetic stirrer. Phosphoric acid (5-25 g, 85% in water (15 M), Sigma-Aldrich) was added to the respective pot ale syrup liquids and the mixtures (pH 1 in all instances) stirred with a magnetic stirrer for 5 minutes. A commercially available grade of calcium oxide (15-20 g, reactivity of the calcium oxide confirmed directly prior to use) was added to the respective stirred mixtures in one portion. The temperatures and physical appearances of the reaction mixtures were recorded. The results of this series of small-scale experiments are summarised in Table 15.

**TABLE 15**

| Ca-PAS small scale ratio screening - relative ratios *versus* product physical state | | | | | |
|---|---|---|---|---|---|
| **Entry** | **CaO (g)** | **PAS1 (g)** | **H₃PO₄ 85% (g)** | **Physical Appearance** | **Max temperature (°C)*** |
| 1 | 15 | 50 | 15 | Brown, cream-like paste | >100 |
| 2 | 15 | 50 | 10 | Brown paste | 99 |
| 3 | 15 | 50 | 5 | Brown, putty-like material | 89 |
| 4 | 20 | 50 | 15 | Fluffy brown powder | >100 |
| 5 | 20 | 50 | 10 | Fluffy brown powder | >100 |
| 6 | 20 | 50 | 5 | Clumpy brown granules | >100 |
| 7 | 25 | 50 | 25 | Powder, foam formation | >100 |
| 8 | 25 | 50 | 15 | Brown powder | >100 |
| 9 | 25 | 50 | 5 | Light brown powder/granules | >100 |
| 10 | 25 | 50 | 0 | Clumpy, putty-like solid | 82 |

| | | | | | |
|---|---|---|---|---|---|
| *Max probe temperature reading = 100 °C | | | | | |

The analytical data obtained for the powdery and granular products shown in Table 15 are summarised in Table 16.

**TABLE 16**

| Analytical data for solid, powdery and granular products shown in Table 15 | | | | |
|---|---|---|---|---|
| **Entry** | **H₂O* % (w/w)** | **Ca % (w/w)** | **P % (w/w)** | **pH** |
| | | | | **1 % (w/w)** |
| | **(Karl Fischer-Lab A)*** | **(AAS)** | **(ICP-MS-Lab A)** | **in dist water** |
| | **(105°C/ 2h-Lab B)** | | **(AAS - Lab B)** | |
| 5 | 27.92 (Lab A) | 28.0 (Lab A) | 4.3 (Lab A) | 11.9 |
| | | | | |
| | 23.5 (Lab B) | 17.0 (Lab B) | 4.5 (Lab B) | |
| | | | | |
| | | (calc 19.78) | | |
| 6 | 23.63 (Lab A) | 30.0 (Lab A) | 2.6 (Lab A) | 11.7 |
| | | | | |
| | 24.5 (Lab B) | 18.6 (Lab B) | 2.6 (Lab B) | |
| | | | | |
| | | (calc 20.22) | | |
| 8 | 26.36 (Lab A) | 29.0 (Lab A) | 5.6 (Lab A) | 12.0 |
| | | | | |
| | 18.1 (Lab B) | 19.9 (Lab B) | 5.6 (Lab B) | |
| | | | | |
| | | (calc 24.01) | | |
| 9 | 33.10 (Lab A) | 35.0 (Lab A) | 2.3 (Lab A) | 12.0 |
| | | | | |
| | 19.2 (Lab B) | 20.3 (Lab B) | 3.1 (Lab B) | |
| | | | | |
| | | (calc 26.09) | | |

Calculated values shown in brackets. Calculations were based on actual product weights. Trace levels of calcium in the starting material PAS1 were ignored in the calculations. Calculation of theoretical moisture contents was not possible as the amount of water that evaporated as steam in each instance was unknown
* Mean result of 2 replicate measurements.

### Testing the exotherm of a mixture of pot ale syrup sample PAS1 and wet glycerol acidified with phosphoric acid (H₃PO₄)

### Small-scale Series - General procedure

A series of small scale experiments which included glycerol in the formulations were subsequently performed. A stock suspension of pot ale syrup (PAS1) in a 1:1 ratio with pharmaceutical grade glycerol blended with ca 9% (w/w) water was prepared and 50 gram portions of the stock solution were acidified with phosphoric acid (85% in water (15 M), Sigma-Aldrich) followed by reaction with a commercial grade of calcium oxide in various ratios.

The results of these experiments are summarised in Table 17.

**TABLE 17**

| Glycerol-Ca-PAS small scale ratio screening - relative ratios *versus* product physical state | | | | | | |
|---|---|---|---|---|---|---|
| **Entry** | **CaO (g)** | **PAS1 (g)** | **H₃PO₄ 85% (g)** | **Glycerol/ water 91:9 (w/w) (g)** | **Physical Appearance** | **Max temperature (°C)*** |
| 11 | 20 | 25 | 20 | 25 | Brown paste | >100 |
| 12 | 20 | 25 | 10 | 25 | Brown putty-like solid | >100 |
| 13 | 20 | 25 | 5 | 25 | Brown putty-like solid | 93 |
| 14 | 25 | 25 | 20 | 25 | Brown putty-like solid | >100 |
| 15 | 25 | 25 | 15 | 25 | Brown putty-like solid | >100 |
| 16 | 25 | 25 | 10 | 25 | Brown powder | >100 |
| 17 | 25 | 25 | 5 | 25 | Brown putty-like solid | >100 |
| 18 | 25 | 25 | 0 | 25 | Thin brown paste | 58 |

The analytical data obtained for the powdery product shown in Entry 16 which resulted from a potent exotherm driven by the reaction of the oxide with water and phosphoric acid in a suitable ratio and with the pot ale components and glycerol supported onto a calcium hydroxide-calcium hydrogen phosphate base (X-Ray Diffraction analysis) in the resulting product powder, is depicted in Table 18.

**TABLE 18**

| Analytical data for powdery product shown in Table 17 | | | | | | |
|---|---|---|---|---|---|---|
| **Entry** | **H₂O^{*}** | **Ca** | **P** | **Glycerol**** | **pH** | |
| | **% (w/w)** | **% (w/w)** | **% (w/w)** | **% (w/w)** | **1 % (w/w) in dist water** | **X-ray Diffraction (XRD) of Solid Phase***** |
| | **(Karl Fischer-Lab A)*** | **(AAS)** | **(ICP-MS - Lab A)** | **(HPLC)** | | |
| | **(105°C/ 2h-Lab B)** | | **(AAS-Lab B)** | | | |
| 16 | 20.35 (Lab A) | 32.0 (Lab A) | 4.0 (Lab A) | 27.2 | 13.9 | Mainly Portlandite (Ca(OH)₂) and Monetite (Calcium Hydrogen |
| | 15.8 (Lab B) | 18.6 (Lab B) | 3.5 (Lab B) | - | | Phosphate). Portlandite appears to be the main phase. However, most reflections are broad and low in intensity, indicating low crystallite size and poor crystallinity of the sample. |
| | | | | | | |
| | | (calc 23.04) | (calc 3.60) | (calc 30.49) | | |

Calculated values are shown in brackets. Calculations were based on actual product weights. Trace levels of calcium and phosphorous in starting materials were ignored in the calculations. Calculation of theoretical moisture contents was not possible as the amount of water that evaporated as steam in each instance was unknown.
* Mean result of 2 replicate measurements.
**Glycerol is not crystalline and therefore not observed by X-Ray Diffraction (XRD) analysis of the solid phase. The glycerol (observed by HPLC of aqueous solutions of the solid products) is believed to be supported onto the inorganic calcium matrix observed by XRD of the solid phases. No calcium glyceroxides such as calcium monoglyceroxide and calcium diglyceroxide, *i.e.* calcium salts of glycerol, were observed in the solid products.

### Results and Conclusions

Pot ale syrup PAS1 was quickly and successfully transformed into free-flowing powders and granules using 85% aqueous phosphoric acid as acidifying agent prior to calcium oxide addition. Calcium oxide : PAS1 : phosphoric acid weight ratios of (20-35) : 50 : (5 - 15) gave fast reactions with liquid-to-solid transformation times of about 30 seconds to about 2 minutes on the 50 gram PAS scale. A mixture of pot ale syrup PAS1 in a 1:1 ratio with pharmaceutical grade glycerol blended with ca 9% (w/w) water was also quickly and successfully transformed into a free-flowing powder using 85% aqueous phosphoric acid as acidifying agent prior to calcium oxide addition. A calcium oxide : PAS1 : phosphoric acid : wet glycerol weight ratio of 25 : 25 : 10 : 25 gave a fast reaction with liquid-to-solid transformation time of less than one minute on the 25 gram PAS scale.

### Example 5

### Wet Gums

Wet gums (WG), with or without the addition of glycerol were transformed into solid materials such as powders or granules by subjecting the crude, viscous, wet material to the exothermic transformation process of the invention. The relative levels of additional components were kept to a minimum and an optimal ratio of WG to additional components was determined, whilst still maintaining acceptable physical properties, in order to meet application criteria.

### Method

A commercially available wet gums sample of 5 litres (mousse-like, green-brown material with low density) was marked WG1 on receipt and refrigerated at ca -2 degrees Celsius.

The following General Specification accompanied the sample:

| **Component** | **Wt%** |
|---|---|
| FFA (Free Fatty Acid) | 0.9 |
| Phospholipids | 27.4 |
| Impurities | 2.9 |
| Moisture | 33.8 |
| Unsaponifiables | 0.4 |
| Oil* | 23.6 |
| Phosphoric Acid | 4.4 |
| Caustic | 6.6 |

| | |
|---|---|
| * The residual oil probably consisted mainly of triglycerides *i.e.* esters of glycerol and fatty acids - biodiesel starting material present in the gums as the result of co-extraction with phospholipids. | |

A fresh sample of WG1 was analysed independently for calcium, moisture content and pH and the following data were obtained.

### WG1

Metals by ICP-MS
TM201 Phosphorus 26 g/kg (2.6 % w/w)
* Alkaline Metals in Foodstuffs by AAS
* TM200 Calcium 8.2 g/kg (0.82 % w/w)
Method Analysis Result Units
* pH (1 % w/w suspension in distilled water) 11.1
TM166 Moisture Content (Karl Fischer) 60.83 % (w/w)
The above value is the mean result of 2 replicate measurements

The moisture content of 60.83% (w/w) as determined by Karl Fisher in duplicate of a representative sample of the actual received sample WG1 was found to be significantly higher than the expected level of ca 33.8% (w/w) as per the General Specification provided.

### Testing the exotherm of wet gums sample WG1 without pH adjustment

The wet gums sample was not pourable and could not be stirred with a magnetic stirrer to effectively mix the material with calcium oxide powder. Accordingly a minimum amount of water was added to the mousse to form a thick suspension prior to treatment with calcium oxide to ascertain whether an exotherm could be generated without pH adjustment from pH 11.1.

A portion of the wet gums sample WG1 was therefore suspended in pure water (Chromasolv for HPLC) in a ratio of WG1 : water = 2:1 w/w (200 g : 100 g = 300 g stock WG1 aqueous suspension) and the material mixed thoroughly with a large magnetic stirrer bar in 1 litre glass beaker to provide a thick, green-brown, pourable and soup-like suspension which was marked WG1 SUSP. The wet gums suspension (WG1 SUSP, 50 g, container was shaken well before sample removal, pH ca 9) was placed in a 250 ml glass beaker and the green-brown suspension stirred with a magnetic stirrer. A commercially available grade of calcium oxide (25 g, reactivity of the calcium oxide confirmed directly prior to use) was added to the stirred liquid in one portion. A small, slow exotherm of ca 15 degrees Celsius was achieved over 8 minutes with the formation of a paste-like material. The starting material (WG1 SUSP) was then acidified with 85% phosphoric acid and the effect of a range of CaO : Phosphoric Acid : WG1SUSP ratios on the rate and magnitude of the exotherm and the physical properties of the resulting product was determined.

### Testing the exotherm of wet gums suspension WG1SUSP acidified with phosphoric acid (H₃PO₄)

### Small-scale Series - General procedure

Wet gums suspension (WG1SUSP1, 50 g, container shaken well before sample removal, pH 4.1) was placed in a 250 ml glass beaker and stirred with a magnetic stirrer. Phosphoric acid (5-15 g, 85% in water (15 M), Sigma-Aldrich) was added to the respective suspensions and the mixtures (pH 1 in all instances) stirred with a magnetic stirrer for 5 minutes. A commercially available grade of calcium oxide (25-30 g, reactivity of the calcium oxide confirmed directly prior to use) was added to the respective stirred mixtures in one portion. The temperatures and physical appearances of the reaction mixtures were recorded. The results of this series of small-scale experiments are summarised in Table 19.

**TABLE 19**

| Ca-WG small scale ratio screening - relative ratios *versus* product physical state | | | | | |
|---|---|---|---|---|---|
| **Entry** | **CaO (g)** | **WG1SUSP (g)** | **H₃PO₄ 85% (g)** | **Physical Appearance** | **Max temperature (°C)*** |
| 1 | 25 | 50 | 15 | Cream-like paste | >100 |
| 2 | 25 | 50 | 10 | Cream-like paste | >100 |
| 3 | 25 | 50 | 5 | Cream-like paste | >100 |
| 4 | 30 | 50 | 15 | Cream-like paste | >100 |
| 5 | 30 | 50 | 10 | Cream coloured granules ("rubber-like") | >100 |
| 6 | 30 | 50 | 5 | Putty-like material | >100 |

| | | | | | |
|---|---|---|---|---|---|
| *Max probe temp reading = 100 °C | | | | | |

The analytical data obtained for the granular product shown in Entry 5 is shown in Table 20.

**TABLE 20**

| Analytical data for solid, granular product shown in Table 19 | | | | |
|---|---|---|---|---|
| **Entry** | **H₂O^{*}** | **Ca** | **P** | **pH** |
| | **% (w/w)** | **% (w/w)** | **% (w/w)** | **1 % (w/w)/ dist water** |
| | **(Karl Fischer-Lab A)*** | **(AAS)** | **(ICP-MS-Lab A)** | |
| | **(105°C/ 2h-Lab B)** | | **(AAS - Lab B)** | |
| 5 | 27.49 (Lab A) | 34.0 (Lab A) | 4.4 (Lab A) | 11.8 |
| | | | | |
| | 25.2 (Lab B) | 24.8 (Lab B) | 4.6 (Lab B) | |
| | | (calc 27.31) | (calc 4.64) | |

Calculated values are shown in brackets. Calculations were based on actual product weights. The calculated calcium level in the product takes into account the calcium content of 0.82 % (w/w) as determined by analysis of WG1. The calculated phosphorous level in the product takes into account the phosphorous content of 2.6% (w/w) as determined by analysis of WG1. Calculation of theoretical moisture contents was not possible as the amount of water that evaporated as steam in each instance was unknown.
* Mean result of 2 replicate measurements.

### Testing the exotherm of wet gums WG1 acidified with phosphoric acid (H₃PO₄)

The wet gums could be effectively suspended by the addition of phosphoric acid in a ratio of WG1 : 85% aqueous phosphoric acid of at least 10:1 (w/w) without the need for the addition of an additional amount of water, to provide suspensions that could be stirred and thus effectively mixed/reacted with the calcium oxide powder.

A series of small scale experiments wherein acidified wet gums suspensions were utilised as starting materials in order to minimise the water contents of the reaction mixtures was carried out.

### Small-scale Series - General procedure

Wet gums (WG1, 50 g, container shaken well before sample removal, pH 4.1) was placed in a 250 ml glass beaker and stirred with a magnetic stirrer. Phosphoric acid (5-20 g, 85% in water (15 M), Sigma-Aldrich) was added to the respective suspensions and the mixtures (pH 1 in all instances) stirred with a magnetic stirrer for 5 minutes. A commercially available grade of calcium oxide (25-30 g, reactivity of the calcium oxide confirmed directly prior to use) was added to the respective stirred mixtures in one portion. The temperatures and physical appearances of the reaction mixtures were recorded. The results of this series of small-scale experiments are summarised in Table 21.

**TABLE 21**

| Ca-WG small scale ratio screening - relative ratios *versus* product physical state | | | | | |
|---|---|---|---|---|---|
| **Entry** | **CaO (g)** | **WG1 (g)** | **H₃PO₄ 85% (g)** | **Physical Appearance** | **Max temperature (°C)*** |
| 7 | 25 | 50 | 20 | Putty-like solid | 99 |
| 8 | 25 | 50 | 15 | Putty-like solid | >100 |
| 9 | 25 | 50 | 10 | Putty-like solid | >100 |
| 10 | 25 | 50 | 5 | Putty-like solid | 95 |
| 11 | 30 | 50 | 10 | Cream coloured fine powder | >100 |
| 12 | 30 | 50 | 5 | Cream coloured powder | >100 |

| | | | | | |
|---|---|---|---|---|---|
| *Max probe temp reading = 100 °C | | | | | |

The analytical data obtained for the powdery products shown in Entries 11 and 12 which resulted from potent exotherms are depicted in Table 22.

**TABLE 22**

| Analytical data for solid, powdery products shown in Table 21 | | | | |
|---|---|---|---|---|
| **Entry** | **H₂O^{*}** | **Ca** | **P** | **pH** |
| | **% (w/w) (Karl Fischer)** | **% (w/w) (AAS)** | **% (w/w) (ICP-MS)** | **1 % (w/w) in dist water** |
| 11 | 31.09 (Lab A) | 40.0 (Lab A) | 5.2 (Lab A) | 12.1 |
| | | | | |
| | | (calc 27.04) | (calc 5.12) | |
| 12 | 36.53 (Lab A) | 39.0 (Lab A) | 3.5 (Lab A) | 12.2 |
| | | | | |
| | | (calc 28.98) | (calc 3.40) | |

Calculated values are shown in brackets. Calculations were based on actual product weights. The calculated calcium level in the product takes into account the calcium content of 0.82 % (w/w) as determined by analysis of WG1. The calculated phosphorous level in the product takes into account the phosphorous content of 2.6% (w/w) as determined by analysis of WG1. Calculation of theoretical moisture contents was not possible as the amount of water that evaporated as steam in each instance was unknown.
* Mean result of 2 replicate measurements.

### Testing the exotherm of a mixture of wet gums WG1 and wet glycerol acidified with phosphoric acid (H₃PO₄)

### Small-scale Series - General procedure

A series of small scale experiments which included glycerol in the formulations were subsequently performed. A stock suspension of wet gums (WG1) in a 1:1 ratio with pharmaceutical grade glycerol blended with *ca* 9% (w/w) water was prepared and 50 gram portions of the stock solution were acidified with phosphoric acid (85% in water (15 M), Sigma-Aldrich) followed by reaction with a commercial grade of calcium oxide in various ratios. The results of these experiments are summarised in Table 23.

**TABLE 23**

| Glycerol-Ca-WG small scale ratio screening - relative ratios *versus* product physical state | | | | | | |
|---|---|---|---|---|---|---|
| **Entry** | **CaO (g)** | **WG1 (g)** | **H₃PO₄ 85% (g)** | **Glycerol/ water 91:9 (w/w) (g)** | **Physical Appearance** | **Max temperature (°C)*** |
| 13 | 15 | 25 | 10 | 25 | Cream-like paste | >100 |
| 14 | 15 | 25 | 15 | 25 | Cream-like paste | >100 |
| 15 | 20 | 25 | 5 | 25 | Cream coloured putty | >100 |
| 16 | 20 | 25 | 10 | 25 | Cream coloured powder | >100 |
| 17 | 20 | 25 | 15 | 25 | Thick paste | >100 |
| 18 | 25 | 25 | 5 | 25 | Cream coloured powder/granules | >100 |
| 19 | 25 | 25 | 10 | 25 | Cream coloured fine powder | >100 |
| 20 | 25 | 25 | 15 | 25 | Cream coloured fine powder | >100 |

| | | | | | | |
|---|---|---|---|---|---|---|
| *Max probe temp reading = 100 °C | | | | | | |

The analytical data obtained for the powdery/granular products shown in Entries 16 and 18-20 are summarised in Table 24.

**TABLE 24**

| Analytical data for solid products shown in Table 23 | | | | | | |
|---|---|---|---|---|---|---|
| **Entry** | **H₂O^{*}% (w/w)(Karl Fischer-Lab A)*(105°C/ 2h-Lab B)** | **Ca% (w/w)(AAS)** | **P% (w/w)(ICP-MS - Lab A)(AAS-Lab B)** | **Glycerol**% (w/w)(HPLC)** | **pH1 % (w/w) In dist water** | **X-rayDiffraction (XRD) of Solid Phase***** |
| 16 | 25.35 (Lab A) | 25.0 (Lab A) | 4.9 (Lab A) | 30.0 | 13.7 | Mixture of Portlandite (calcium hydroxide), Calcium Hydrogen Phosphate Hydroxide and Monetite (Calcium Hydrogen Phosphate). Portlandite appears to be the main phase and Monetite is only detected in trace amounts. |
| | | | | | | |
| | 17.6 (Lab B) | 16.9 (Lab B) | 4.7 (Lab B) | - | | |
| | | | | | | |
| | | (calc 18.90) | (calc 4.52) | (calc 30.82) | | |
| 18 | 27.30 (Lab A) | 33.0 (Lab A) | 2.9 (Lab A) | 29.9 | 13.9 | Mainly Portlandite (calcium hydroxide) and Calcium Hydrogen Phosphate Hydroxide. Portlandite appears to be the main phase. |
| | | | | | | |
| | 14.7 (Lab B) | 21.3 (Lab B) | 2.7 (Lab B) | - | | |
| | | | | | | |
| | | (calc 23.51) | (calc 2.69) | (calc 30.76) | | |
| 19 | 24.64 (Lab A) | 30.0 (Lab A) | 4.7 (Lab A) | 28.8 | >14 0.5% | Mainly Portlandite (calcium hydroxide) and Calcium Hydrogen |
| | 19.7 (Lab B) | 19.4 (Lab B) | 4.3 (Lab B) | - | (w/w): 13.7 | Phosphate Hydroxide. Portlandite appears to be the main phase. |
| | | | | | | |
| | | (calc 22.37) | (calc 4.29) | (calc 29.26) | | |
| 20 | 22.0 (Lab A) | 27.0 (Lab A) | 6.0 (Lab A) | 27.1 | 13.9 | Mainly Portlandite (calcium hydroxide) and Monetite (Calcium Hydrogen Phosphate). Portlandite appears to be the main phase. |
| | | | | | | |
| | 15.9 (Lab B) | 17.8 (Lab B) | 5.6 (Lab B) | - | | |
| | | | | | | |
| | | (calc 21.48) | (calc 5.78) | (calc 28.10) | | |

Calculated values are shown in brackets. Calculations were based on actual product weights. The calculated calcium level in the product takes into account the calcium content of 0.82 % (w/w) as determined by analysis of WG1. The calculated phosphorous level in the product takes into account the phosphorous content of 2.6% (w/w) as determined by analysis of WG1. Calculation of theoretical moisture contents was not possible as the amount of water that evaporated as steam in each instance was unknown.
* Mean result of 2 replicate measurements.
** Glycerol is not crystalline and therefore not observed by X-Ray Diffraction (XRD) analysis of the solid phases. The glycerol (observed by HPLC of aqueous solutions of the solid products) is believed to be supported on the inorganic calcium matrix observed by XRD of the solid phases. No calcium glyceroxides, *i.e.* calcium salts of glycerol, were observed in the solid products as these would have been detected by XRD if present.

### Results and Conclusions

A suspension of wet gums WG1 in water in a ratio of WG1: water of 2:1 (w/w) was quickly and successfully transformed on small scale into a granular solid using 85% aqueous phosphoric acid as acidifying agent prior to calcium oxide addition. Calcium oxide : WG1 suspension : phosphoric acid weight ratios of 30 : 50 : 10 gave a fast reaction with liquid-to-solid transformation time of less than one minute on the 50 gram WG1 suspension scale. A suspension of wet gums WG1 in 85% aqueous phosphoric acid was quickly and successfully transformed into a powder. Calcium oxide : WG1 : phosphoric acid weight ratios of 30 : 50 : (5-10) gave fast reactions with liquid-to-solid transformation times of ca 30 seconds to one minute on the 50 gram WG1 scale.

A mixture of wet gums WG1 in a 1:1 ratio with pharmaceutical grade glycerol blended with ca 9% (w/w) water was also quickly and successfully transformed on small scale into a free-flowing powders and/or granules using 85% aqueous phosphoric acid as acidifying agent prior to calcium oxide addition. Calcium oxide : WG1 : phosphoric acid : wet glycerol weight ratios of (20-25) : 25 : (5-15) : 25 gave fast reactions with liquid-to-solid transformation times ranging from ca 30 seconds to 3 minutes on the 25 gram WG scale.

In the Examples analytical results are reported as received. In general, the analytical data shown for calcium and phosphorous contents obtained from Laboratory B match the calculated values better than that obtained from analytical Laboratory A and should therefore be regarded as more accurate, whereas the analytical data for moisture content through Karl Fisher analyses reported by Laboratory A appear to be closer to the expected levels in general than the corresponding data received from Laboratory B obtained through heat drying of the respective samples for 2 hours at 105 degrees Celsius.

Alternative additives such as organic acids or inorganic acids other than phosphoric acid as well as alkaline additives could be used as pH-adjustment agents as substitute for phosphoric acid for cost and/or product application considerations.

Scale-up was not expected to be linear. The physical properties and composition profile of products would, in addition to starting material ratios, be a function of various factors which include but are not limited to the equipment composition/design, relative surface areas, mode of agitation and efficiency, and heat transfer/evaporation dynamics.

It was also possible to combine the liquid raw materials utilised in Example 1 - 5 with each other in various ratios, but also with other liquid materials such as wet glycerol pre-treatment or solid materials post metal oxide treatment to produce solid products with desired physical characteristics and ingredient profiles for specific identified uses.

The addition of larger amounts of calcium oxide and/or phosphoric acid than the levels demonstrated, and which were selected to keep calcium contents in the products to a minimum, led to larger exotherms and even shorter reaction times under the same conditions and scale and resulted in the formation of solid products with higher calcium and phosphorous levels. These products also generally had lower moisture levels and therefore varied dry matter contents depending on the exact combinations selected and amount of water driven off as steam in each instance.

### Example 6

### Wet Distiller's Solubles

A sample of wet distiller's solubles produced by the fermentation of maize to produce fructose syrup and containing free water was split into two portions. The first portion was untreated and the second portion was combined with commercially available calcium to produce a treated sample. The calcium oxide comprised approximately 30% by mass of the total mass of the treated sample.

After five days the untreated sample had degraded to the point that it was unfit for use as an animal feedstuff. The fitness or otherwise for use, was determined by a visual inspection for moulds and odour.

One year later, the treated sample was visually determined to be in the same condition as the initial untreated fermentation residue a year before.

### Example 7

### Spent Brewer's Grains

Samples of spent brewer's grains were drawn from the discharge line of a brewery in South Africa. The samples, packed in dry ice in a cold box, were transported over a distance of approximately 40 kilometres to a laboratory. At the laboratory, the samples were thoroughly mixed and initially split into a first portion (Portion 1) and a second portion (Portion 2). The second portion was about twice the size of the first. Portion 1 was left untreated. Material produced from Portion 1 and Portion 2 is designated below using the code "AR" (as received).

Portion 2 was placed on a clean, standard, laboratory screen deck with 1.4mm apertures supported from below. As much water as possible was manually squeezed out with a clean flat plastic disc and the sample was then manually remixed after the squeezing. The squeezed material was then split into a third portion (Portion 3) and a fourth portion (Portion 4) of approximately the same size. Material produced from Portion 3 and Portion 4 is designated below using the code "SQ" (squeezed).

Portion 4 was added to a high speed kitchen food-shredder and shredded for about two minutes. The shredded material was then returned to the 1.4mm aperture screen and squeezed again, as described above, and manually remixed again after the second squeezing to produce a shredded and squeezed portion (Portion 5). Material produced from Portion 5 is designated below using the code "SH" (shredded).

Samples of Portion 1 ("AR"), Portion 3 ("SQ") and Portion 5 ("SH") were then delivered to a microbiological testing facility about 15 kilometres from the treatment laboratory. Each was tested for initial total microbial, yeast and mould counts, respectively.

### Sample treatment

Samples of Portions 1, 3 and 5 were subjected to treatment with varying amounts of a powdered, commercially-available calcium oxide containing approximately 94% calcium oxide (CaO) (as shown in Tables 3, 4 and 5) and stored under insect-proof screens at ambient temperature for seven days. Separate untreated samples were similarly stored under insect-proof screens at ambient temperature for seven days (as shown in Tables 1 and 2). During the trial period the ambient temperature ranged from 11 to 33 degrees C.

### Analysis

The free moisture content on the initial spent brewer's grains was determined to be 78.1% m/m. After exposure to the environment for seven days, all of the samples were tested at a South African National Accreditation System (SANAS) approved microbiological testing facility. Each was tested for total micro-organism, yeast and mould counts to determine the affect of the various treatments. A similar procedure to that described in K.A. Rosentrater et al, Food Bioprocess Technol (2008) was used for the microbiological evaluation.

### Sample appearance

The "7-day" untreated samples were compared visually against the corresponding quicklime-treated samples. All the untreated samples were discoloured, watery and showed evidence of moulds growing on the surface. In addition, they all exuded an unpleasant odour. The treated samples appeared lighter in colour, coarser and grained, had no visible surface moisture and no unpleasant odours. The higher the oxide content, the lighter and drier the samples appeared.

The results are set out in Tables 25-29 below.

### Results

Initial free moisture: 78.1 % m/m

**TABLE 25**

| Counts at day 0 (untreated samples) (cfu/q) | | | | | |
|---|---|---|---|---|---|
| **Sample** | **Portion** | **Treatment** | **Plates** | **Yeasts** | **Moulds** |
| 02AR | Portion 1 | None | 108000 | 30 | 20 |
| 02SQ | Portion 3 | Squeezed | 40000 | <0 | <0 |
| 02SH | Portion 5 | Shredded | 36000 | <10 | <10 |

**TABLE 26**

| Counts at day 7 (untreated samples) (cfu/g) | | | | | |
|---|---|---|---|---|---|
| **Sample** | **Portion** | **Treatment** | **Plates** | **Yeasts** | **Moulds** |
| 02AR | Portion 1 | None | 3.00E+8 | 9.8E+05 | 4.6E+04 |
| 02SQ | Portion 3 | Squeezed | 3.00E+8 | 5.38E+05 | 3.8E+05 |
| 02SH | Portion 5 | Shredded | 3.00E+8 | 3.00E+05 | 5.7E+05 |

**TABLE 27**

| Counts at day 7 ("As Received" samples - treated with CaO) (cfu/g) | | | | | | | | |
|---|---|---|---|---|---|---|---|---|
| **Sample** | **Portion** | **Cake (g)** | **CaO (g)** | **Total (g)** | **%CaO** | **Plates** | **Yeasts** | **Moulds** |
| 02AR | Portion 1 | 50.19 | 2.54 | 52.73 | 4.8 | 54000 | 40 | 1160 |
| 02AR | Portion 1 | 50.44 | 5.01 | 55.45 | 9.0 | 8900 | 80 | 170 |
| 02AR | Portion 1 | 50.41 | 7.55 | 57.96 | 13.0 | 350 | <10 | <10 |

**TABLE 28**

| Counts at day 7 ("Squeezed" samples - treated with CaO) (cfu/g) | | | | | | | | |
|---|---|---|---|---|---|---|---|---|
| **Sample** | **Portion** | **Cake (g)** | **CaO (g)** | **Total (g)** | **%CaO** | **Plates** | **Yeasts** | **Moulds** |
| 02SQ | Portion 3 | 50.83 | 2.51 | 53.34 | 4.7 | 470 | <10 | 80 |
| 02SQ | Portion 3 | 50.26 | 7.50 | 57.76 | 13.9 | 150 | <10 | <10 |

**TABLE 29**

| Counts at day 7 ("Shredded" samples - treated with CaO) (cfu/g) | | | | | | | | |
|---|---|---|---|---|---|---|---|---|
| **Sample** | **Portion** | **Cake (g)** | **CaO (g)** | **Total (g)** | **%CaO** | **Plates** | **Yeasts** | **Moulds** |
| 02SH | Portion 5 | 50.00 | 2.58 | 52.28 | 4.9 | 8900 | 10 | <10 |
| 02SH | Portion 5 | 50.19 | 7.57 | 57.76 | 13.1 | 220 | <10 | <10 |

| | | | | | | | | |
|---|---|---|---|---|---|---|---|---|
| cfu = colony forming units Plates = Total plate count | | | | | | | | |

### Conclusions

The untreated "AR" (as received) residue showed significantly higher total microbial counts compared to both the squeezed "SQ" and shredded "SH" samples and there was a general reduction in the total plate count with increasing oxide dosage. Generally, the "AR" samples had higher total plate counts than the similarly calcium oxide - treated "SQ" material at an exposure time to the environment of seven days and, in turn, the "SQ" material had slightly lower total plate counts than the similarly calcium oxide - treated "SH" material.

Based on the total plate count results, the "AR" samples were unfit for animal consumption after seven days in an environment subject to normal daily temperature cycling. The same conclusion could be drawn for both the untreated "SQ" and "SH" samples tested at the same time.

However the treated samples were very different. Treatments with calcium oxide ranged from 4.7% to 13.9% (mass of calcium oxide to mass of spent grains). In every case, "AR", "SQ" and "SH" samples exhibited total plate counts several orders of magnitude lower than the untreated materials. It was clearly evident from the plate counts, lack of odour and appearance of the samples, that the respective treatment processes with calcium oxide had arrested and almost eliminated degradation of the spent brewer's grains.

### Example 8

### Damp Grains

The process of Example 7 was followed using damp grains from a whiskey distillery in Scotland. Microbiological evaluation was carried out by an independent Good Laboratory Practice (GLP) laboratory in England and the same testing procedure as that implemented in South Africa in Example 7 and based on the work of K.A. Rosentrater et al, Food Bioprocess Technol (2008) was followed.

A sample of whiskey distiller's grains was drawn from a discharge line in Scotland. The sample, packed in dry ice in a cold box, was transported to a laboratory in Yorkshire. At the laboratory, the sample was split into two equal portions of ca 500 gram each. Portion 1 was left untreated (Sample A).

### Sample treatment

Portion 2 (temperature: 6 degrees Celsius) was manually squeezed and the sample manually remixed (temperature: 10 degrees Celsius). After squeezing the material was then shredded in a high speed kitchen food-shredder for about two minutes to produce a squeezed and shredded residue (temperature 14.3 degrees Celsius).

The material was weighed (410 g) and 41 g (i.e. 10 m/m %) of a powdered, commercially-available calcium oxide containing approximately 94% CaO was thoroughly mixed with the residue in a food mixer to produce Sample B. A rise in temperature to 32.2 degrees Celsius over 35 minutes was observed during the mixing process.

Samples of A and B were then delivered to a microbiological testing facility about 3 hours away from the microbiology laboratory. At the microbiology testing facility, the untreated (A) and treated (B) samples were distributed into a series of numbered Petri dishes ensuring that the depth in each Petri dish was uniform and the surfaces of the samples were flat. The dishes were left uncovered but protected by netting to protect against insects or the like but otherwise left open to the elements in a shed surrounded by fields at ambient temperature in order to mimic storage conditions on a farm. During the trial period the ambient temperature ranged from -0.7 to 22.8 degrees C.

Samples were provided by successively removing one Petri dish from the Sample A (untreated) set and one Petri dish from the sample B (treated) set. The samples were incubated on agar and the total viable counts (TVCs) and mould counts were measured initially and after one week, two weeks and one month, respectively.

### Analysis

The free moisture content of the initial, untreated whiskey distillation (damp grains) residue (Sample A) was determined to be 75.84% m/m. The free moisture content of the initial treated whiskey distillation residue (Sample B) was determined to be 66.65% m/m. After exposure to the environment for one, two and four weeks, respectively, both samples A and B were tested at an independent British GLP microbiological testing facility. Each was tested for total micro-organism, yeast and mould counts to determine the effect of the treatment applied over time. A similar procedure to that described in K.A. Rosentrater et al, Food Bioprocess Technol (2008) was used for the microbiological evaluation.

### Experimental Procedures

Each sample (10 g) was added to 90 ml Phosphate Buffered Saline (PBS). The samples were shaken for 10 minutes using a wrist action shaker (RWJ Rotashake). Serial ten-fold dilutions in PBS were made from the initial dilutions (typically 5 dilution steps). Pour plates were prepared using both molten Tryptone Soya Agar (TSA) for total aerobic bacterial and fungal counts, and molten Rose-Bengal Chloamphenicol Agar (RBCA) for fungal counts. Each dilution was tested in duplicate.

All agar plates were incubated at 20 ± 25°C for up to seven days. After that time the plates were counted in order to determine the number of colony forming units (cfu). The dilution giving 30 to 300 cfu per plate were chosen for plate counting.

### Sample appearance, odour and pH

The untreated sample (A) was compared visually against the corresponding quicklime-treated sample (B). The untreated material (A) showed no change in appearance and odour over the one month period, and appeared to become drier. The treated material (B) became much lighter in colour a few hours after treatment, but then remained unchanged in appearance over the one month period. The distinctive smell observed on day zero was much reduced after seven days. The pH of a 10% suspension in distilled water of the untreated material (A) showed an increase from 5.33 to 7.19 over the one month period. The pH of a 10% suspension in distilled water of the treated material (B), however, showed an opposite trend, i.e. a drop in pH from 12.80 to 8.41 (Tables 6 and 7).

### Results

Initial free moisture (Sample A): 75.84% m/m
Initial free moisture (Sample B): 66.65% m/m

**TABLE 30**

| Sample A - Counts and pH versus time | | | |
|---|---|---|---|
| **Day** | **Count cfu/g dry weight** | | **pH** |
| | **Total aerobic bacteria + fungi** | **Fungi** | |
| 0 | 6.71 x 10⁴ | <41 | 5.65 |
| 7 | 7.45 x 10⁸ | <41 | 5.33 |
| 14 | 2.73 x 10⁹ | 2.07 x 10⁶ | 5.83 |
| 1 month | 2.40 x 10⁹ | 2.90 x 10⁷ | 7.19 |
| 2 months | 7.20 x 10⁸ | 1.16 x 10⁷ | 5.49 |
| 3 months | 3.81 x 10⁸ | 2.07 x 10⁷ | 5.86 |
| 6 months | 8.73 x 10⁷ | 1.35 x 10⁷ | 5.38 |
| 9 months | 4.72 x 10⁷ | 6.00 x 10⁶ | 5.99 |
| 1 year | 4.04 x 10⁷ | 2.40 x 10⁶ | 5.27 |

| | | | |
|---|---|---|---|
| *cfu = colony forming units | | | |

### Observations of appearance and odour

No change over 1 year, except became more dry

### Temperature range throughout sampling period

-3.0 to 41.6ºC

**TABLE 31**

| Sample B - Counts and pH versus time | | | |
|---|---|---|---|
| **Day** | **Count cfu/g dry weight*** | | **pH** |
| | **Total aerobic bacteria** + **fungi** | **Fungi** | |
| **0** | 60 | <30 | 12.80 |
| **7** | <30 | <30 | 11.99 |
| **14** | <30 | <30 | 8.60 |
| **1 month** | 1.20 x 10² | 1.20 x 10² | 8.41 |
| **2 months** | 9.75 x 10² | 9.60 x 10² | 8.37 |
| **3 months** | 2.85 x 10² | 1.80 x 10² | 8.17 |
| **6 months** | 5.70 x 10² | 3.15 x 10³ | 7.84 |
| **9 months** | 9.30 x 10² | 8.25 x 10² | 7.67 |
| **1 year** | 6.90 x 10² | 6.45 x 10² | 8.07 |

| | | | |
|---|---|---|---|
| *cfu = colony forming units | | | |

### Observations of appearance and odour

No change in appearance over 1 year except became more dry. The distinctive smell observed on Day 0 was much reduced by Day 7.

### Temperature range throughout sampling period

-3.0 to 41.6ºC

### Conclusions

From the results shown in Table 30, it can be seen that there was a substantial increase in microbial growth in the untreated material (A) during the first two weeks of the trial period. A degree of microbial contamination and growth had already taken place pre-testing, as the hot material fresh from the distillation process could be expected to be sterile. The pH of the initial material was mostly slightly acidic during the 12 month trial period.

It can be seen from the results shown in Table 31 that both bacterial and fungal growth in the untreated material (A) was effectively eliminated during the first two weeks and then increased slightly and remained at low levels throughout the remainder of the 12 month trial period. The degree of bacterial contamination and growth that had already taken place pre-testing was not observed. This was because the treatment substance (calcium hydroxide formed by reacting calcium oxide with water in wet grains) present in the treated sample was transferred onto the agar plates and also inhibited microbial colony formation on the plates. This is shown in Example 10. The treatment substance killed microorganisms so that non-viable organisms were transferred onto the agar medium and hence no colonies formed on the agar as it was found that the active treatment agent (hydroxyl ion) is deactivated when mixed with the Phosphate Buffered Saline solution (PBS).

The pH of the treated material was initially high but decreased gradually during the trial period. Effective inhibition appears to be correlated to the pH level as a slight increase in counts is observed when the pH dropped below 8.60 after the second week.

The treated material became drier over time, which may explain the longer than expected preservation effect over the one year period that could be expected to be ascribed to chemical treatment only. Thus, the primary chemical sterilisation at the early stages of the trial is believed to be enhanced by a secondary preservation effect through mechanical air-drying of the residue over time which creates a hostile environment for microorganisms. The secondary drying effect could be compared to heat drying, however it is expected that heat-dried material would be subject to degradation through microbial action when exposed to moisture, whereas the chemically treated material is self-sterilising due the presence of the preservative and would be expected to be much more stable than a similar heat-dried material when exposure to moisture for example during storage or transportation.

### Example 9

### Spent Brewer's Grains

Samples of spent brewer's grains were drawn from the discharge line of a brewery in South Africa. The conditions of transportation and handling were the same as set out in Example 7.

At the laboratory, the samples were thoroughly mixed and initially split into a first portion (Portion 1) and a second portion (Portion 2). Portion 1 was left untreated. A sample of Portion 1,was delivered immediately to a microbiological testing facility about 15 kilometres away from the treatment laboratory and was tested for initial total microbial, yeast and mould counts, respectively. No water removal prior to treatment was done in this experiment as was the case in Example 8 wherein a similar wet material was partially dewatered by pressing and the residue treated with 10% (w/w/) calcium oxide.

### Sample treatment

Samples from Portion 2 were subjected to treatment with varying amounts of a powdered, commercially-available calcium oxide containing approximately 94% calcium oxide (CaO) as shown in Table 32. The treatments varied from 2.5 to 10% (w/w) calcium oxide addition. The samples were stored in batches (according to the calcium oxide treatment) under insect-proof screens at ambient temperature for fifty six days. Separate untreated samples were similarly stored under insect-proof screens at ambient temperature for a total of 56 days. During the trial period the ambient temperature ranged from 10 to 30 degrees C. As this period was the southern hemisphere spring / early summer, the humidity as well as ambient temperatures varied widely.

### Analysis

The free moisture content on the initial spent brewer's grains was determined to be 79.4% m/m. After exposure to the environment for seven days, all of the samples were tested at a South African National Accreditation System (SANAS) approved microbiological testing facility. Each was tested for total micro-organism, yeast and mould counts to determine the affect of the various treatments. A similar procedure to that described in K.A. Rosentrater et al, Food Bioprocess Technol (2008) was used for the microbiological evaluation.

Samples from each treatment were drawn every seven days. No further calcium oxide treatment or agitation took place after the initial mix. In each case the entire sample was isolated and delivered to the microbiological testing facility.

### Sample appearance

The "7-day" untreated samples were visually compared against the corresponding quicklime-treated samples. All the untreated samples were discoloured, and showed evidence of moulds growing on the surface after 7-days. In addition, they all exuded an unpleasant odour. The treated samples appeared lighter and more yellow in colour, coarser and highly grained, had no visible surface moisture and exuded no unpleasant odours. The higher the oxide content, the lighter and drier the samples appeared. This difference in appearance persisted across the entire test period. It was noted that all the samples appeared to lose moisture during the trial period.

### Results

The total bacterial, yeast and mould counts, respectively, over a period of 56 days are shown in Table 32. The results are reported as received.

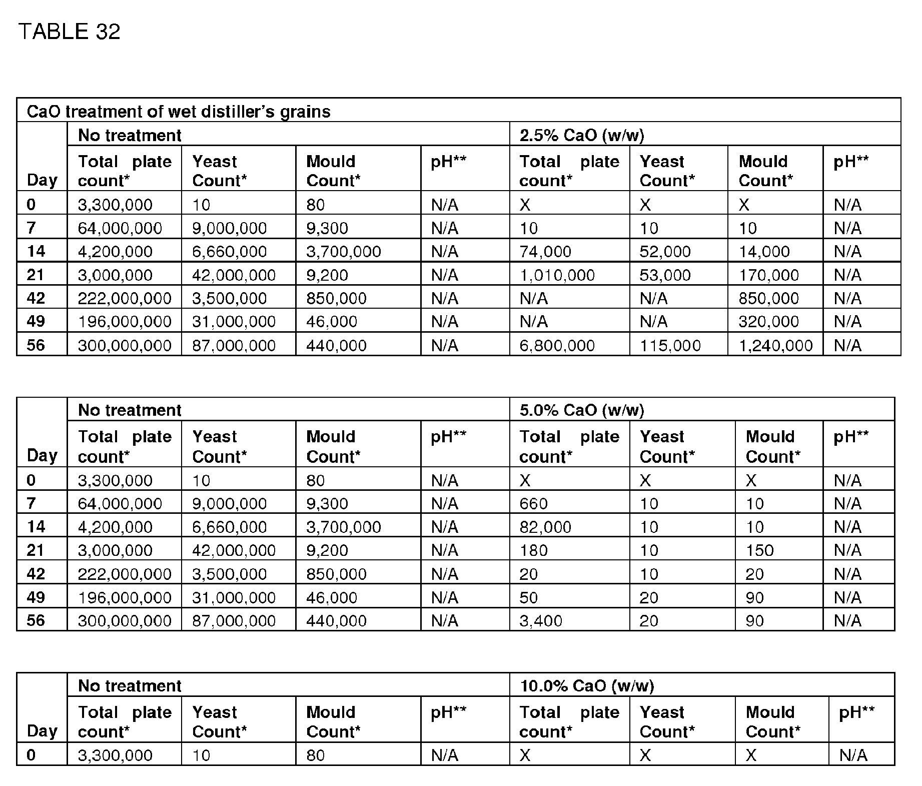

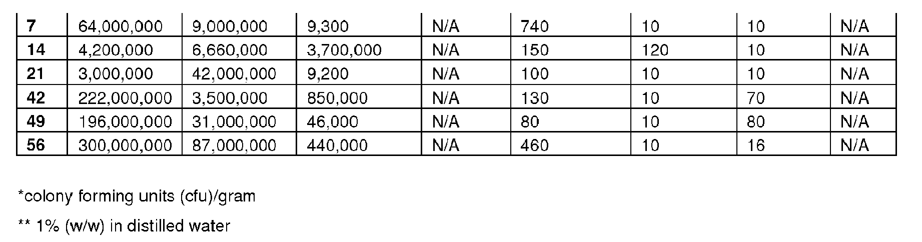

### Conclusions

The effective inhibition and therefore shelf life of the treated fermentation residue was related to the amount of calcium oxide, the higher the dose, the longer the effective inhibition period and hence the longer the shelf life. This is shown in Table 32, which tracks the samples over a period of fifty six days and three different treatment levels, notwithstanding variations the could be due to sampling anomalies or particular weather conditions.

A complete sterilisation with total a reduction of total initial microbial count of 3,300,000 to zero and with a subsequent preservation effect over the 56 day trial period was observed at a calcium oxide level of 10% (w/w).

A similar but reduced effect in terms of both the initial sterilisation effect and subsequent preservation efficacy was observed at a calcium oxide level of 5.0% (w/w) over 49 days.

At the 2.5% (w/w) calcium oxide level a good initial sterilisation effect was observed with a subsequent preservation effect over only the first week of the trial period (also refer to Example 14).

It was not possible to determine from Examples 6-9 whether the treatment had killed the microorganisms or only inhibited them. When the plates were poured for counts it was possible that the treatment reagent was still present in the agar and inhibited growth of the colonies in the agar. An attempt was then made to effectively remove the treatment agent (calcium hydroxide) before transfer onto the colony growth medium (agar) from the treated sample using the untreated sample as a control.

This was done by repeatedly washing with sterile water and centrifuging to remove the dissolved calcium hydroxide in the supernatant. On re-suspending in fresh water the sample was shaken for 10 minutes in order to dissolve the calcium hydroxide before centrifuging. This procedure was conducted a total of six times and the pH of the supernatant was measured to determine any reduction in the pH.

After the fifth centrifugation the pellet was re-suspended in water and the pH was found to be 9.72. The pellet was centrifuged for a sixth time and re-suspended in PBS. The pH was found to be 8.39. By comparison the values of the untreated sample after centrifugation were 6.22 in water and 6.72 in PBS. The washing and centrifugation procedure had accordingly failed to remove the calcium hydroxide and the pH was actually higher than the pH measured initially.

A membrane filtration was therefore attempted in order to capture any bacteria on a membrane disc and wash through all other material. However, this technique was also found not to be successful as the sample quickly blocked the filter (even though the material was allowed to settle for a few minutes to remove the grains).

A new approach was therefore followed to prove whether the treatment of the invention killed or inhibited the microorganisms. When performing total viable counts (TVCs), the agar plates (when they were molten and containing 1 ml of the test sample dilution) were spiked with bacterial organisms (*E.Coli* and *P. aeruginosa)* of a known concentration. If the organisms grew, this would indicate that the conditions in the agar plate had not inhibited them. A control with no sample was run at the same time. If no growth from the samples was demonstrated, this would indicate kill rather than inhibition. The results are set out in Example 10 below.

### Example 10

### Microbial Count

The aim of this example was to determine whether calcium oxide added to animal feed reduces the microbial count by killing rather than inhibiting microorganisms.

### Samples

Treated and untreated samples were evaluated. The treated sample contained 5% (w/w) calcium oxide.

### Method

The moisture content was measured on Day 0 by weighing five 20 g replicates of each sample into a crucible and drying in an oven overnight. The remaining samples were distributed into Petri dishes, covered with sterile netting, and transferred to an unheated shed.

On Day 7, 10 g amounts of each sample were suspended in either 90 ml PBS or 90 ml sterile distilled water and shaken for 10 minutes. The pH of each suspension was then measured and compared. A further 10 g of each sample was suspended in 90 ml PBS and serial ten-fold dilutions prepared in PBS. One ml pour plates were prepared in duplicate in both Tryptone Soya Agar (TSA) and Rose-Bengal Chloramphenicol Agar (RBCA). The plates were incubated at 20 - 25ºC for six days after which time the colonies were counted.

On Day 9, 10 g of each sample was suspended in 90 ml PBS and shaken for 10 minutes. The pH was measured. These suspensions were then further diluted in PBS to give a series of ten-fold dilutions. One ml pour plates using molten TSA were prepared for each dilution. At the same time as the pour plates were prepared, the plates were inoculated with either *Escherichia coli* or *Pseudomonas aeruginosa* in 0.1 ml aliquots from a suspension containing approximately 1000 bacterial cells. This was performed in duplicate for each organism. The plates were mixed well and allowed to set. An inoculum count was also performed for each organism, using 1 ml PBS instead of 1 ml sample dilution.

The plates were incubated at 30 - 35ºC for approximately 24 hours after which time the bacterial colonies were counted.

### Results

Day 0 - moisture content
Moisture content
Untreated sample 75.12%
Treated sample 68.74%
Day 7-pH
pH in water pH in PBS
Untreated sample 5.56 6.55
Treated sample 8.75 7.64
Day 7 - TVC

| | **Count cfu/g dry weight** | |
|---|---|---|
| | **Total aerobic bacteria + fungi** | **Fungi** |
| Untreated sample | 4.26 x 10⁹ | <40 |
| Treated sample | 3.65 x 10³ | <32 |

Day 9 - pH

| | |
|---|---|
| | pH in PBS |
| Untreated sample | 6.47 |
| Treated sample | 7.62 |

Day 9 - Spiking test
Inoculum counts:
   *P. aeruginosa* 181 cells
   *E. coli* 157 cells

**Untreated sample**

| **Dilution** | ***P. aeruginosa*** | | ***E. coli*** | |
|---|---|---|---|---|
| | **Individual count** | **Mean count** | **Individual count** | **Mean count** |
| -1 | It was not possible to count the colonies due to the presence of other bacterial species. However, the number of surface colonies observed was similar to the inoculum plates. | | 147, 121 | 134 |
| -2 | | | 147, 180 | 164 |
| -3 | | | 139, 159 | 149 |
| -4 | | | 136, 155 | 146 |
| -5 | | | 141, 139 | 140 |

**Treated sample**

| **Dilution** | ***P. aeruginosa*** | | ***E. coli*** | |
|---|---|---|---|---|
| | **Individual count** | **Mean count** | **Individual count** | **Mean count** |
| -1 | 180, 213 | 197 | 146, 149 | 148 |
| -2 | 160, 191 | 176 | 134, 154 | 144 |
| -3 | 194, 171 | 183 | 165, 174 | 170 |
| -4 | 191, 213 | 202 | 172, 157 | 165 |

The Phosphate Buffered Saline (PBS) used to prepare dilutions of the samples exerted a buffering effect of approximately one pH unit on both the treated and untreated samples. It is concluded that mixing the treatment agent (calcium hydroxide) with PBS neutralises the hydroxide so that it loses its microbial activity and hence the observed similarity in *E. Coli* total viable counts (TVCs) on spiked agar with and without test sample, respectively.

The spiking test showed that there was full recovery of the test organisms at all sample dilutions. Therefore the addition of calcium oxide did not demonstrate an inhibitory effect on either test organism. When extrapolated to previous TVCs observed for treated and untreated samples, this indicated that the reduction in TVC observed for treated samples *versus* untreated samples was a result of kill rather than inhibition of the organisms present in the sample.

### Example 11

### Anti-microbial Effect of Calcium Hydroxide

The object of this example was to investigate the anti-microbial effect of calcium hydroxide in solution. The anti-microbial activity of an aqueous calcium hydroxide solution was tested against a pathogen (*E.Coli*). It was found that the hydroxide solution killed the pathogen thereby indicating that the hydroxyl anion acts as a potent anti-microbial agent which reduces the microbial count by killing rather than inhibiting microorganisms.

### Test Sample

Calcium hydroxide was obtained from Acros (code 219181000, >98% pure). It was formulated in distilled water with continuous stirring for several hours at 1.67g/L (0.023 M). This was around its limit of solubility at room temperature and it formed a hazy solution at this concentration.

### Method

*Escherichia coli* NCIMB 8545 was subcultured onto TSA and the plates incubated at at 30 - 35ºC for approximately 24 hours. After this time, surface growth was harvested and directly suspended into sterile distilled water and standardised to give 30 - 45% light transmission at 520 nm on a Jenway 6105 Spectrophotometer - an approximate yield of 2 (10⁸) cfu/ml. A 0.1 ml aliquot of this suspension was inoculated into 9.9 ml of CaOH solution. This was performed in duplicate. At the same time, 1 ml of bacterial suspension was removed from the original stock suspension and placed into 9 ml PBS to perform the initial (Time 0) count. The inoculated calcium hydroxide suspensions were then shaken for one hour at room temperature. After this time 1 ml samples of the bacterial suspension were removed from the test containers and placed into 9 ml PBS. For each diluted sample, further serial ten-fold dilutions in PBS down to 10⁻⁵ were made and then used to prepare duplicate 1 ml pour plate counts in TSA. Pour plates were also prepared from the neat (undiluted) sample. The plates were incubated at 30 - 35ºC for approximately 24 hours. Following incubation, the plates were counted. Optimally, plates with counts of 30 - 300 colonies were used to calculate the counts at each sampling time.

In order to demonstrate that the calcium hydroxide did not have an inhibitory effect on the growth of the test organism when present in the agar plates, the calcium hydroxide was diluted in PBS to give a series of ten-fold dilutions. One ml pour plates using molten TSA were prepared for each dilution. However, at the same time as the pour plates were prepared, the plates were inoculated with *Escherichia coli* NCIMB 8545 in 0.1 ml aliquots from a suspension containing approximately 1000 bacterial cells. This was performed in duplicate.

The plates were incubated at 30 - 35ºC for approximately 24 hours after which time the bacterial colonies were counted.

### Results

### Antimicrobial efficacy test

Time 0 count: 3.75 x 10⁶ cfu/ml
60 minute count, replicate A: 0, 0
60 minute count, replicate B: 0, 0

**Spiking test**

| **Dilution** | **Individual count** | **Mean count** |
|---|---|---|
| Control | 237, 192 | 215 |
| Neat | 216, 191 | 205 |
| -1 | 197, 209 | 203 |
| -2 | 194, 203 | 199 |
| -3 | 192, 240 | 216 |
| -4 | 194, 196 | 195 |
| -5 | 235, 194 | 215 |

### Discussion

A saturated solution of calcium hydroxide at 1.67 g/L (0.023 M) demonstrated potent antimicrobial activity. The spiking test showed that there was full recovery of the test organism (E.coli) at all sample dilutions. Therefore the calcium hydroxide did not demonstrate an inhibitory effect on the test organism and any reduction in the number of organisms was due to kill.

### Example 12

### Anti-microbial Effect against Escherichia coli

The object of this example was to evaluate the anti-microbial effect against Escherichia coli of saturated, aqueous solutions of calcium glyceroxide *versus* calcium hydroxide at reduced contact times.

The experiment described in Example 11 was therefore repeated using a saturated aqueous solution of calcium diglyceroxide *versus* a saturated aqueous solution of calcium hydroxide as control at contact times of 1 hour and 10 minutes, respectively.

### Test Samples

Calcium hydroxide and calcium diglyceroxide powders were dissolved in sterile distilled water at 8.35 g/L (0.037M) for calcium diglyceroxide and 1.67 g/L (0.023M) for calcium hydroxide with continuous stirring for several hours. This was around the limit of solubility at room temperature and hazy solutions formed at these concentrations.

### Method

*Escherichia coli* NCIMB 8545 was subcultured onto TSA and the plates incubated at 30 - 35ºC for approximately 24 hours. After this time, surface growth was harvested and directly suspended into sterile distilled water and standardised to give 30 - 45% light transmission at 520 nm on a Jenway 6105 Spectrophotometer - an approximate yield of 2 × 10⁸ cfu/ml. A 0.1 ml aliquot of this suspension was inoculated into 9.9 ml of both saturated calcium diglyceroxide and calcium hydroxide solutions. This was performed in duplicate. At the same time, 1 ml of bacterial suspension was removed from the original stock suspension and placed into 9 ml PBS to perform the initial (Time 0) count. The inoculated suspensions were then shaken for one hour at room temperature. After both 10 minutes and one hour, 1 ml samples of the bacterial suspension were removed from the test containers and placed into 9 ml PBS. For each diluted sample, further serial ten-fold dilutions in PBS down to 10⁻⁵ were made and then used to prepare duplicate 1 ml pour plate counts in TSA. Pour plates were also prepared from the neat (undiluted) sample. The plates were incubated at 30 - 35ºC for approximately 24 hours.

Following incubation, the plates were counted. Optimally, plates with counts of 30 - 300 colonies were used to calculate the counts at each sampling time.

### Results

No colonies were present on any plates from the samples treated with calcium diglyceroxide and calcium hydroxide solutions after 10 minutes and one hour incubation. The time 0 count was 4.00 x 10⁶ cfu/ml.

### Conclusion

The saturated solution of calcium diglyceroxide at 8.35 g/L (0.037 M) demonstrated potent antimicrobial activity which was comparable with calcium hydroxide at 1.67 g/L (0.023M). This showed that both saturated solutions of calcium diglyceroxide and calcium hydroxide demonstrated potent antimicrobial activity at contact times of 1 hour and 10 minutes, respectively.

### Example 13

### Anti-microbial Effect Against Other Microbial Species

The object of this example was to evaluate the anti-microbial effect against additional microbial species of saturated, aqueous solutions of calcium glyceroxide *versus* calcium hydroxide at reduced contact times.

The experiment described in Example 11 was therefore repeated using a saturated aqueous solution of calcium diglyceroxide *versus* a saturated aqueous solution of calcium hydroxide as control against Escherichia coli, Salmonella abony and Clostridium difficile at contact times of 10 minutes and 1 minute, respectively.

### Test Samples

Calcium hydroxide and calcium diglyceroxide powders were dissolved in sterile distilled water at 8.35 g/L (0.037M) for calcium diglyceroxide and 1.67 g/L (0.023M) for calcium hydroxide with continuous stirring for several hours. This was around the limit of solubility at room temperature and hazy solutions formed at these concentrations.

### Method

*Escherichia coli* NCIMB 8545 and *Salmonella abony* NCTC 6017 were subcultured onto Tryptone Soya Agar (TSA) and the plates incubated at 30 - 35ºC for approximately 24 hours. *Clostridium difficile* ATCC 43255 was subcultured onto Fastidious Anaerobe Agar (FAA) + 5% defibrinated horse blood and the plates incubated at 30 - 35ºC for approximately 48 hours. After this time, surface growth was harvested and directly suspended into sterile distilled water and standardised to give 30 - 45% light transmission at 520 nm on a Jenway 6105 Spectrophotometer - an approximate yield of 2 × 108 cfu/ml. Aliquots (0.1 ml) of these suspensions were inoculated separately into 9.9 ml of both calcium diglyceroxide and calcium hydroxide saturated solutions. This was performed in duplicate for each organism. At the same time, 1 ml of bacterial suspension was removed from the original stock suspensions and placed into 9 ml PBS to perform the initial (Time 0) count. The inoculated suspensions were then shaken for ten minutes at room temperature. After 1 and 10 minutes, 1 ml samples of the bacterial suspensions were removed from the test containers and placed into 9 ml PBS. For each diluted sample, further serial ten-fold dilutions in PBS down to 10-5 were made and then used to prepare duplicate 1 ml pour plate counts in TSA. Pour plates were also prepared from the neat (undiluted) sample. For *Clostridium difficile,* 0.1 ml spread plates were prepared on FAA instead of 1 ml pour plates due to the presence of blood in the agar. The plates were incubated at 30 - 35ºC for approximately 24 hours (48 hours for *Clostridium difficile*).

Following incubation, the plates were counted. Optimally, plates with counts of 30 - 300 colonies were used to calculate the counts at each sampling time.

### Results

### Escherichia coli

**One minute treatment**

| **Sample** | **Corrected count cfu/mL** |
|---|---|
| Inoculum count (t=0) | 6.95 x 10⁸ |
| Calcium hydroxide replicate A | 1.35 x 10⁶ |
| Calcium hydroxide replicate B | 1.23 x 10⁵ |
| Calcium diglyceroxide replicate A | 0 |
| Calcium diglyceroxide replicate B | 1 |

No colonies were present on any plates from the samples treated with calcium diglyceroxide solution and calcium hydroxide solution after 10 minutes incubation.

### Salmonella abony

**One minute treatment**

| **Sample** | **Corrected count cfu/mL** |
|---|---|
| Inoculum count (t=0) | 7.00 x 10⁸ |
| Calcium hydroxide replicate A | 59 |
| Calcium hydroxide replicate B | 11 |
| Calcium diglyceroxide replicate A | 2 |
| Calcium diglyceroxide replicate B | 3 |

No colonies were present on any plates from the samples treated with calcium diglyceroxide solution and calcium hydroxide solution after 10 minutes incubation

### Clostridium difficile

**One minute treatment**

| **Sample** | **Corrected count cfu/mL** |
|---|---|
| Inoculum count (t=0) | 8.20 x 10⁷ |
| Calcium hydroxide replicate A | 8.50 x 10² |
| Calcium hydroxide replicate B | 9.50 x 10² |
| Calcium diglyceroxide replicate A | 1.30 x 10³ |
| Calcium diglyceroxide replicate B | 7.00 x 10² |

**Ten minute treatment**

| **Sample** | **Corrected count cfu/mL** |
|---|---|
| Inoculum count (t=0) | 8.20 x 10⁷ |
| Calcium hydroxide replicate A | 1.10 x 10² |
| Calcium hydroxide replicate B | 1.20 x 10² |
| Calcium diglyceroxide replicate A | 85 |
| Calcium diglyceroxide replicate B | 50 |

### Conclusion

The saturated solution of calcium diglyceroxide at 8.35 g/L (0.037 M) demonstrated potent antimicrobial activity with at least a 4 log₁₀ reduction observed for each organism after the one minute treatment period. After the ten minute treatment period, no colonies were observed for *Escherichia coli* and *Salmonella abony,* but some colonies of *Clostridium difficile* were recovered, although a 6 log₁₀ reduction was observed. The saturated calcium diglyceroxide solution at 8.35 g/L (0.037 M) was demonstrated to be more effective than the saturated calcium hydroxide solution at 1.67 g/L (0.023 M).

### Example 14

The calcium oxide treatment trial described in Example 9 wherein wet distiller's grains were treated with 2.5%, 5% and 10.0% calcium oxide, respectively, *versus* untreated material was repeated using lower doses of calcium oxide. In this trial the same source of wet distiller's grains (again with now partial water removal prior to treatment) was treated. Also, the same protocol as described in Example 9 was applied, but at lower doses of calcium oxide *i.e.* 0.5%, 1.0%, 1.5%, 2.0% and 2.5%, respectively, *versus* untreated material.

The purpose of this experiment was to ascertain the effect on microbial counts and hence degree of preservation achieved over time at these low doses. The pH values of all test samples were also measured in order to establish the relationship between pH level and microbial levels as also observed and discussed in Example 8 wherein a similar, but partially de-watered residue was treated with calcium oxide at 10% (w/w). The results of this trial are summarised in Table 33.

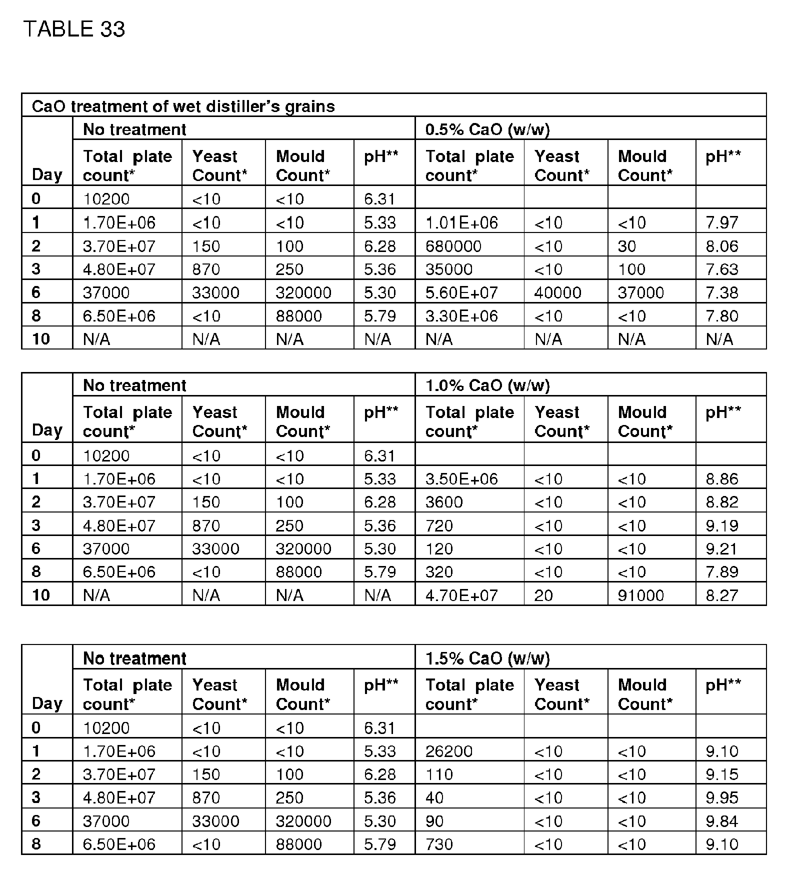

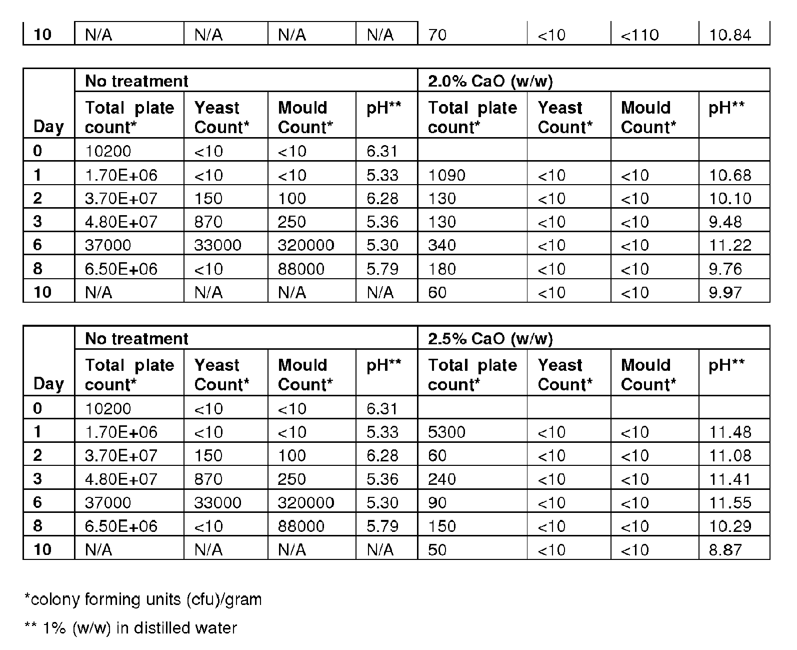

### Conclusions

A substantial initial reduction in microbial count (sterilisation effect) and subsequent preservation effect over the 10 day period at calcium oxide levels of 2.0% and 2.5% (w/w) was achieved. The pH of the treated material decreased gradually during the trial period which is linked to a reduction in the hydroxyl ion concentration.

A similar but reduced effect in terms of time for the initial reduction in micro-organism levels to occur was observed at a calcium oxide level of 1.5% (w/w).

At 1.0% (w/w) the initial reduction of micro-organism levels took an additional day compared to the higher concentration scenarios, but once this was achieved, the material appears to have suppressed microbial levels up to day 8. At 0.5% (w/w) only a very limited effect was observed as the hydroxyl ion concentration as also reflected in the relatively low pH levels of below 8 was not sufficient to have a significant impact on the micro-organism levels.

### Example 15

The calcium oxide treatment trial described in Example 9 wherein wet distiller's grains were treated with 2.5%, 5% and 10.0% calcium oxide powder, respectively, *versus* untreated material was repeated using a calcium oxide powder dose of 5% (w/w) as control *versus* calcium hydroxide powder at 6/6% (w/w) powder and calcium diglyceroxide (Ca-DGO) powder at 20% and 40% (w/w), respectively.

In this trial the same source of wet distiller's grains (again with now partial water removal prior to treatment) was treated. Also, the same protocol as described in Example 9 was applied.

The relative dose level by weight of the calcium hydroxide was increased in order to take into account the amount needed to theoretically provide the same hydroxyl ion concentration than in the case of the corresponding calcium oxide dose (5% w/w) assuming complete solubilisation in water in each instance: 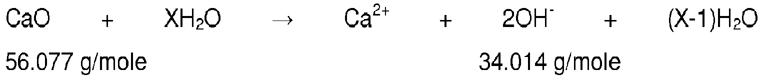 Thus
5.00 g CaO provides 0.0892 mole (3.0328g) hydroxyl ions (active) in aqueous solution 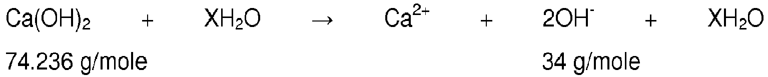 Thus
6.62 g Ca(OH)₂ provides 0.0892 mole (3.0328g) hydroxyl ions (active) in aqueous solution

A similar conversion was applied to calcium diglyceroxide in which case a dose of ca 20 gram provides the same amount (0.08929 mole) of anti-microbial active than a calcium oxide dose of 5 gram: 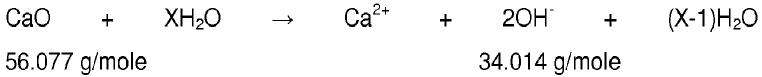 Thus
5.00 g CaO provides 0.0892 mole (3.0328g) hydroxyl ions (active) in aqueous solution 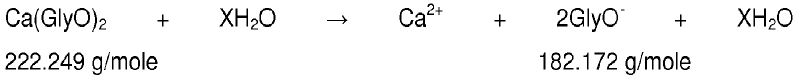 Thus
19.85 g Ca(GlyO)₂ provides 0.0892 mole (16.266 g) glyceroxyl ions (active) in aqueous solution

An additional double calcium diglyceroxide powder dose of 40% (w/w) was included in order to compare the relative efficacy thereof with the 20% (w/w) dose over the 5 week duration of the trial period.

The calcium diglyceroxide powder (<1 mm particle size) used in these trials was prepared according to the method described in Bio-Energy Ingredients Ltd Patent PCT/IB2009/052931. (Please change if this number is incorrect). X-ray diffraction analysis (XRD) of the powder confirmed that the material was pure phase calcium diglyceroxide. The diffraction pattern was an identical match of the calcium diglyceroxide pattern published by Kouzu *et al* for crystalline calcium diglyceroxide which was prepared under anhydrous conditions in refluxing methanol under an inert atmosphere (Kouzou, M.; Applied Catalysis A: General; vol. 334 (2008), page: 357-365).

The purpose of this trial was to ascertain the effect on microbial counts and hence degree of preservation achieved over time for the respective substances at the specified dose levels. The pH values of all test samples were also measured in order to establish the relationship between pH level and microbial levels as also observed and discussed in Example 8 wherein a similar, but partially de-watered residue was treated with calcium oxide at 10% (w/w). The results of these trials are summarised in Table 34.

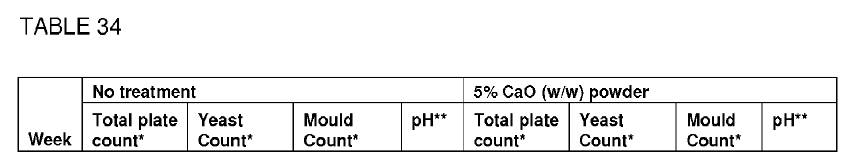

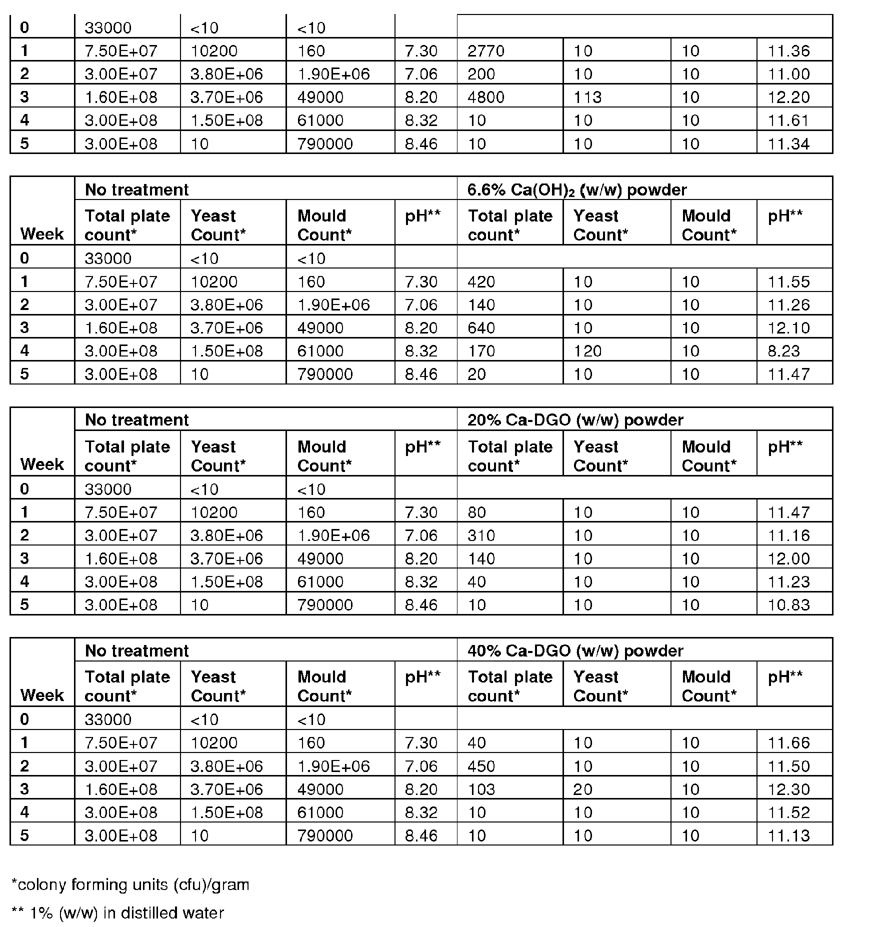

### Conclusions

A substantial reduction in initial microbial count *i.e.* sterilisation effect was observed with calcium diglyceroxide powder at both the 20% and 40% (w/w) dose levels, with smaller but significant day 1 reductions observed with calcium hydroxide powder at 6.6% (w/w) and calcium oxide powder at 5% (w/w).

All materials were effectively preserved as demonstrated by the very small microbial counts of the test samples *i.e.* in the order of 10-20 colony forming units per gram at the end of the 5 week trial period compared to the 300,000,000 cfu/gram of the untreated material.

At the end of the trial period the pH values of all the test samples were still very high which indicated high levels of remaining, unreacted and thus available anti-microbial hydroxide/glyceroxyl ions at the end of the 5 week trial period. The result obtained for the 5% (w/w) calcium oxide treatment corresponds to the result obtained in Example 9 (Table 32) for treatment with 5% (w/w) calcium oxide powder at the 42 day (6 weeks) time point.

### Example 16

The experiment described in Example 15 was repeated under similar conditions evaluating the anti-microbial efficacy of calcium diglyceroxide powder at a lower dose level of 10% (w/w). The results of this trial are shown in Table 35.

**TABLE 35**

| **Week** | **No Treatment** | | | | **10% Ca-DGO (w/w) powder** | | | |
|---|---|---|---|---|---|---|---|---|
| | **Total plate count*** | **Yeast Count*** | **Mould Count*** | **pH**** | **Total plate count*** | **Yeast Count*** | **Mould Count*** | **pH**** |
| **0** | 97000 | <10 | <10 | 7.02 | | | | |
| **1** | 3.70E+06 | <10 | 150 | 7.05 | 610 | <10 | <10 | 9.43 |
| **2** | 2.30E+08 | 1.22E+06 | 1.50E+07 | 7.57 | <10 | <10 | <10 | 7.32 |
| **3** | 3.00E+08 | 3.30E+07 | 1.90E+06 | 6.90 | 580 | <10 | <10 | 7.31 |
| **4** | 3.00E+08 | 5.20E+07 | 2.00E+07 | 6.84 | 5000 | <10 | 310 | 8.01 |
| **5** | 3.00E+08 | 1.50E+08 | 1.44E+08 | 7.12 | 36000 | <10 | 1020 | 7.23 |

| | | | | | | | | |
|---|---|---|---|---|---|---|---|---|
| *colony forming units (cfu)/gram ** 1% (w/w) in distilled water | | | | | | | | |

### Conclusions

A substantial reduction in initial total microbial count was observed with calcium diglyceroxide powder at the 10% (w/w) level. The residue was also effectively preserved over the first 3 weeks of the trial with a total microbial count of 580 at the 3 week time point. The total microbial count after weeks 4 and 5 of 5,000 and 36,000, respectively, were still below the 97,000 of the material received and tested on day 0 and substantially lower than that of the untreated residue which had a total microbial count in the order of 2-3 x 10⁸ from weeks 2 to 5.

The pH values of the test samples decreased over time and reflected the decline in glyceroxyl ion levels and hence the observed decline in anti-microbial efficacy of the treatment agent during the course of the 5 week trial.

### Example 17

The experiment described in Example 16 was repeated under similar conditions evaluating the anti-microbial efficacy of calcium diglyceroxide granules (1-2.36 mm particle size) as opposed to the powder (<1 mm particle size) at the same dose level of 10% (w/w). The results of this trial are shown in Table 36.

The calcium diglyceroxide granules (1-2.36 mm particle size) used in this and subsequent trials was prepared according to the same method as described for the preparation of the powder in Example 15.

**TABLE 36**

| **Week** | **No treatment** | | | | **10% Ca-DGO (w/w) granules** | | | |
|---|---|---|---|---|---|---|---|---|
| | **Total plate count*** | **Yeast Count*** | **Mould Count*** | **pH**** | **Total plate count*** | **Yeast Count*** | **Mould Count*** | **pH**** |
| **0** | 97000 | <10 | <10 | 7.53 | | | | |
| **1** | 3.00E+08 | 43000 | 80000 | 7.16 | 11000 | 480 | 10 | 7.88 |
| **2** | 3.00E+10 | <10 | 1.08E+10 | 7.55 | <10 | <10 | <10 | 7.71 |
| **3** | 3.00E+08 | 6.60E+06 | 3.30E+07 | 7.74 | 540 | <10 | <10 | 7.44 |
| **4** | 3.00E+08 | <10 | 2.10E+07 | 7.12 | 60 | <19 | <10 | 7.14 |
| **5** | 2.35E+08 | <10 | 5.50E+07 | 5.72 | 650 | <10 | <10 | 8.37 |

| | | | | | | | | |
|---|---|---|---|---|---|---|---|---|
| *colony forming units (cfu)/gram ** 1% (w/w) in distilled water | | | | | | | | |

### Conclusions

A substantial but smaller reduction in initial total microbial count at day 1 was observed with the calcium diglyceroxide granules compared to the powder (Example 16) at the 10% (w/w) level. As in the case of the powder, the residue was also effectively preserved at the 2 and 3 week tome points of the trial with similar total microbial counts than that achieved for the powder of below 10 and 540 at the 2 and 3 week time points, respectively. The granules did out-performed the powder at the 4 and 5 week time points with total microbial count of only 60 and 650, respectively, at these time points compared to the 5,000 and 36,000 levels obtained at the 4 and 5 week time points for the powder shown in Example 16 (Table 35).

The longer preservation time achieved for the granules compared to the powder is ascribed to a slow/sustained release effect of the anti-microbial agent i.e. glyceroxyl ions from the granules compared to the faster action, but shorter effective duration observed for the powder shown in Example 16 (Table 35). The addition of treatment agent in granule form as opposed to powder form therefore appears to enhance the period of effective anti-microbial action.

The pH values of the test samples were lower than that obtained for the test samples when using the powder (Example 16, Table 35). This is ascribed to the lower solubility of the granules compared to the powder when preparing 1% suspensions of the test samples in distilled water for pH measurement.

It is concluded that the shelf life of the wet distiller's grains were increased by the larger particle size of the treatment agent which gave rise to a situation where the treatment agent released the anti-microbial active slowly where and when it was exposed to moisture *i.e.* under conditions which promote the growth and multiplication of micro-organisms. This mode of action is a consequence of the smaller relative exposed surface area of the granules and hence lower solubility in water thereof compared to the powder. However, in cases where a quick, but shorter anti-microbial action is required, the powder would be the preferred choice as demonstrated by the total microbial counts at the week 1 time point for powder (Table 35) compared to granules (Table 36).

### Example 18

A trial similar to those described in Examples 15-17 was performed using the following treatment agents:
- Calcium oxide powder at 5% and 10% (w/w)
- Calcium hydroxide at 3.3% and 6.6% (w/w)
- Calcium diglyceroxide (Ca-DGO) in powder form at a dose level of 15 % (w/w)
- Calcium diglyceroxide (Ca-DGO) in granule form at dose levels of 10% and 15% (w/w)
- Calcium diglyceroxide (Ca-DGO) in a 1:1 mixed powder-granule form at 15% (w/w)

The purpose of this trial was to establish the anti-microbial efficacies of the treatment agents at the selected doses in terms of their initial sterilisation efficacies and subsequent preservation efficacies over a 9 week period..

The 3.3% (w/w) and 6.6% (w/w) calcium hydroxide levels correspond in terms of molar amount of active theoretically provided by 2.5% (w/w) and 5% (w/w) calcium oxide, respectively, whereas the 10% (w/w) and 15% (w/w) calcium diglyceroxide levels would correspond in terms of the molar amount of anti-microbial active theoretically provided by ca 2.5% (w/w) and ca 3.75% (w/w) calcium oxide, respectively according to the principles suggested in Example 15.

The calcium diglyceroxide powder (<1 mm particle size) and granules (1-2.36 mm particle size) used in this trial was prepared according to the same method as described in Example 15.

The results of microbiological testing of test samples at weekly intervals are shown in Tables 37 to 42.

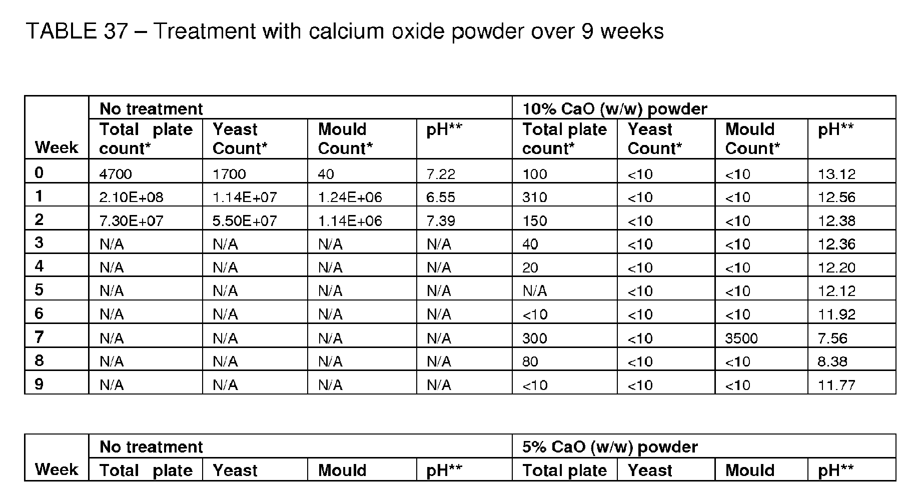

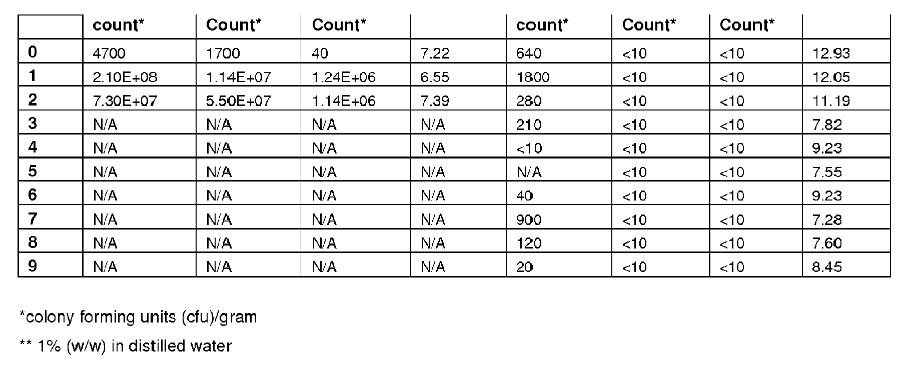

### Conclusions

A substantial reduction in initial microbial counts compared to that of the untreated material *i.e.* sterilisation effect was achieved with calcium oxide at the 10% (w/w) levels. The material was effectively preserved throughout the 9 week period as reflected in the low microbial counts. A similar but reduced efficacy level especially during the initial stages was achieved with calcium oxide powder at the 5% (w/w) level. In both instances the material had very low microbial counts at the end of the 9 week period, i.e. in the order of <10 to 20 cfu/gram compared to the untreated material which had counts in the order of 10⁷ to 10⁸ already at the week 1 and 2 time points (testing therefore discontinued).

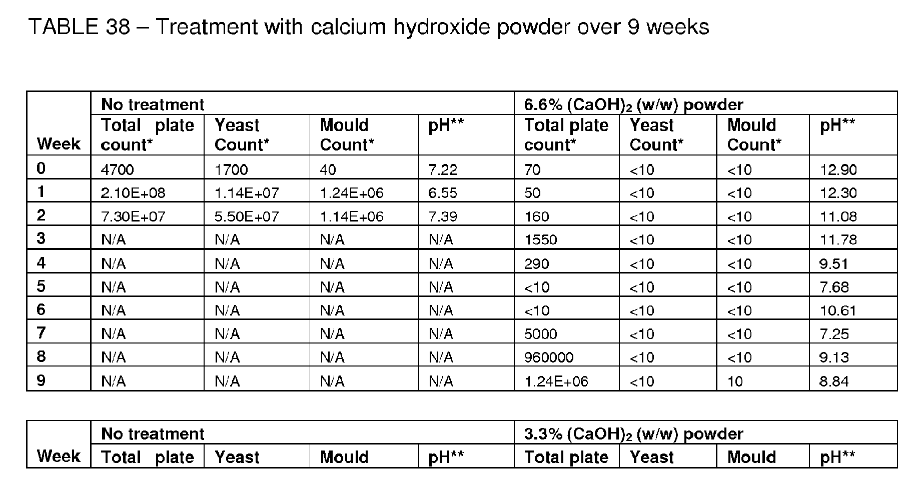

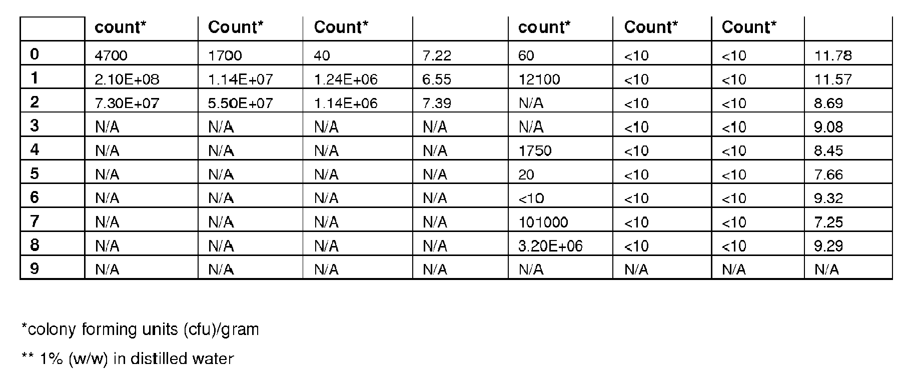

### Conclusions

A better initial sterilisation and subsequent preservation effect over the first 2 weeks was achieved with the 6.6% (w/w) calcium hydroxide powder than with calcium oxide (Table 37) at both the corresponding 5% (w/w) as well as the higher 10% (w/w) levels. This was likely due to the better availability of the anti-microbial hydroxyl ions than in the case of the calcium oxide which only generates the hydroxide through exposure to a sufficient amount of free water:

CaO + XH₂O → Ca²⁺ + 2OH⁻ + (X-1)H₂O

As most of the water in the wet grains is contained inside the grain particles, this has a limiting effect on the calcium oxide efficacy compared to that of the calcium hydroxide powder during the first few weeks. However, over time, the calcium oxide out-performed the calcium hydroxide powder likely as the result of a slow release effect as the reservoir of calcium oxide is slowly converted to calcium hydroxide through contact with air-humidity and gradual release of moisture from the grains. This concept of slow, sustained anti-microbial action is similar to that observed with calcium glyceroxide granules *versus* powder (Example 17).

An effective initial sterilisation effect was achieved with calcium hydroxide powder at the 3.3% (w/w) level. A reduced efficacy was however achieved at the later stages of the trial period compared to the 6.6% (w/w) dose.

**TABLE 39 - Treatment with calcium diglyceroxide powder over 9 weeks**

| **Week** | **No treatment** | | | | **15% (w/w) Ca-DGO powder** | | | |
|---|---|---|---|---|---|---|---|---|
| | **Total plate count*** | **Yeast Count*** | **Mould Count*** | **pH**** | **Total plate count*** | **Yeast Count*** | **Mould Count*** | **pH**** |
| **0** | 4700 | 1700 | 40 | 7.22 | 40 | <10 | <10 | 11.50 |
| **1** | 2.10E+08 | 1.14E+07 | 1.24E+06 | 6.55 | 80 | <10 | <10 | 11.73 |
| **2** | 7.30E+07 | 5.50E+07 | 1.14E+06 | 7.39 | N/A | <10 | <10 | 7.33 |
| **3** | N/A | N/A | N/A | N/A | 100 | <10 | <10 | 7.38 |
| **4** | N/A | N/A | N/A | N/A | 10 | <10 | <10 | 8.83 |
| **5** | N/A | N/A | N/A | N/A | N/A | <10 | <10 | N/A |
| **6** | N/A | N/A | N/A | N/A | 50 | <10 | <10 | 9.18 |
| **7** | N/A | N/A | N/A | N/A | 40 | <10 | <10 | N/A |
| **8** | N/A | N/A | N/A | N/A | 70 | <10 | <10 | 9.14 |
| **9** | N/A | N/A | N/A | N/A | 10 | <10 | 350 | 9.07 |

| | | | | | | | | |
|---|---|---|---|---|---|---|---|---|
| *colony forming units (cfu)/gram ** 1% (w/w) in distilled water | | | | | | | | |

### Conclusions

An effective initial sterilisation and subsequent preservation effect over the full 9 week trial period was observed for 15% (w/w) calcium diglyceroxide in powder form.

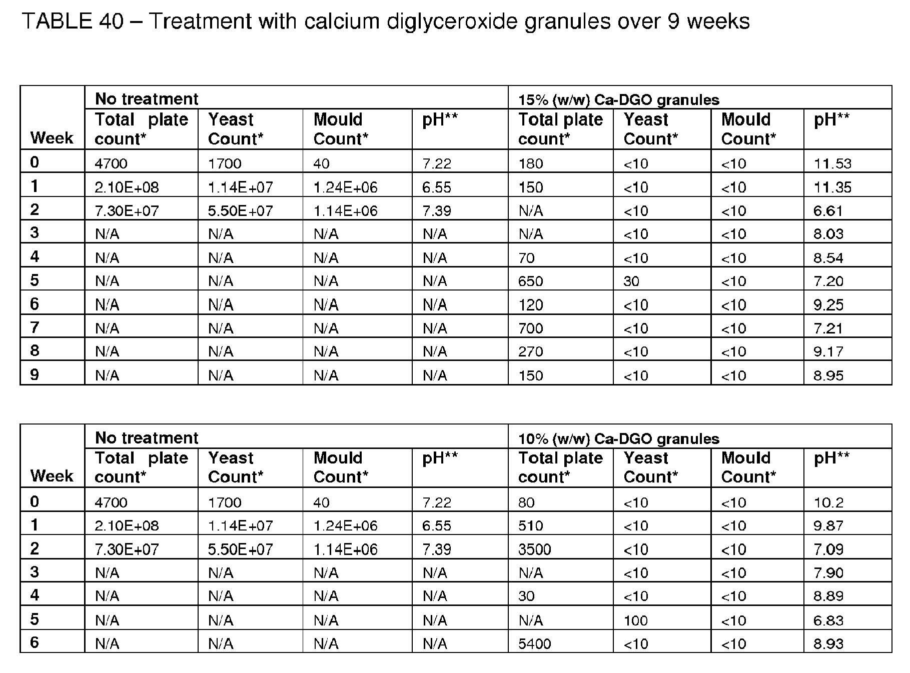

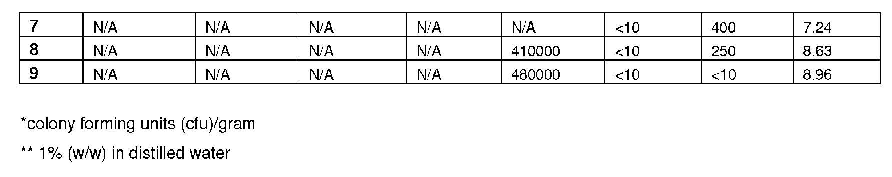

### Conclusions

A substantial but slightly less effective initial sterilisation effect than that achieved with 15% (w/w) granules (Table 39) was achieved using calcium diglyceroxide granules at dose levels of 10% and 15% (w/w), respectively. A similar subsequent preservation effect over the full 9 week trial period was observed with 15% (w/w) calcium diglyceroxide in granule form, whereas the granules at 10% (w/w) was effective for a shorter period of ca 7 weeks.

**TABLE 41 - Treatment with a 1:1 mixture of calcium diglyceroxide powder and granules over 9 weeks**

| **Week** | **No treatment** | | | | **15% (w/w) Ca-DGO powder + granules (1:1)** | | | |
|---|---|---|---|---|---|---|---|---|
| | **Total plate count*** | **Yeast Count*** | **Mould Count*** | **pH**** | **Total plate count*** | **Yeast Count*** | **Mould Count*** | **pH**** |
| **0** | 4700 | 1700 | 40 | 7.22 | 540 | | | |
| **1** | 2.10E+08 | 1.14E+07 | 1.24E+06 | 6.55 | 50 | <10 | <10 | 11.47 |
| **2** | 7.30E+07 | 5.50E+07 | 1.14E+06 | 7.39 | 710 | <10 | <10 | 7.57 |
| **3** | N/A | N/A | N/A | N/A | 70 | <10 | <10 | 7.88 |
| **4** | N/A | N/A | N/A | N/A | <10 | <10 | <10 | 9.29 |
| **5** | N/A | N/A | N/A | N/A | N/A | 20 | <10 | 6.78 |
| **6** | N/A | N/A | N/A | N/A | 150 | <10 | <10 | 9.27 |
| **7** | N/A | N/A | N/A | N/A | 660 | <10 | <10 | 7.23 |
| **8** | N/A | N/A | N/A | N/A | 4200 | <10 | <10 | 9.18 |
| **9** | N/A | N/A | N/A | N/A | 45000 | <10 | <10 | 8.93 |

| | | | | | | | | |
|---|---|---|---|---|---|---|---|---|
| *colony forming units (cfu)/gram ** 1% (w/w) in distilled water | | | | | | | | |

### Conclusions

The use of calcium diglyceroxide as a mixture of powder and granules in a 1:1 ratio did not result in either a superior initial sterilisation effect or a superior long-term preservation effect compared to treatment with the substance in either powder (Table 39) or granule (Table 40) form at the same dose level of 15% (w/w).

The microbial count results obtained for the treatment of wet distiller's grains residues with and without a prior de-watering step, respectively, with calcium oxide, calcium hydroxide and calcium diglyceroxide in powder or granule form at various dose levels are summarised in Tables 42 and 43.

**TABLE 42 - Treatment agent/dose versus minimum preservation time of partially dewatered wet distiller's grains in Example 8 with total microbial counts of test samples below 1000, and 60 colony forming units (cfu) per gram, respectively**

| **Treatment agent** | **Dose (% w/w)** | **<1000 cfu/g*** | **<60 cfu/g*** |
|---|---|---|---|
| None | N/A | N/A | N/A |
| CaO powder | 10 | ≥1 year | 2 weeks |

| | | | |
|---|---|---|---|
| *colony forming units (cfu)/gram | | | |

**TABLE 43 - Treatment agent/dose versus preservation times of distiller's grains not subjected to a prior de-watering step in Examples 16-18 with total microbial counts of test samples below 1000, 100 and 10 colony forming units (cfu) per gram**

| **Treatment agent** | **Dose (% w/w)** | **<1000 cfu/g*** | **<100 cfu/g*** | **<10 cfu/g*** |
|---|---|---|---|---|
| None | N/A | N/A | N/A | N/A |
| Ca-DGO (p)** | 10% | ≥3 weeks | ≥2 weeks | N/A |
| Ca-DGO (g)*** | 10% | ≥4 weeks | ≥4 weeks | N/A |
| Ca-DGO (p)** | 15% | ≥9 weeks | ≥9 weeks | ≥9 weeks |
| Ca-DGO (g)** | 15% | ≥9 weeks | ≥9 weeks | N/A |
| CaO | 5% | ≥9 weeks | ≥9 weeks | ≥9 weeks |
| CaO | 10% | ≥9 weeks | ≥9 weeks | ≥9 weeks |
| Ca(OH)₂ | 3.3% | ≥6 weeks | ≥6 weeks | ≥6 weeks |
| Ca(OH)₂ | 6.6% | ≥6 weeks | ≥6 weeks | ≥6 weeks |

| | | | | |
|---|---|---|---|---|
| * cfu/g = colony forming units (cfu) per gram of test sample ** Ca-DGO (p) = calcium diglyceroxide powder ***Ca-DGO (g) = calcium diglyceroxide granules | | | | |

### Example 19

### Sterilisation of animal bedding materials

Animal bedding and litter materials were sterilised with calcium glyceroxide and calcium hydroxide. In different embodiments of the invention the calcium glyceroxide in aqueous solution was sprayed onto the bedding or litter material to sterilise it (as shown for calcium hydroxide and calcium diglyceroxide, respectively, in aqueous medium against representative pathogenic bacteria *i.e.* E.Coli, Salmonella abony and Clostridium difficile in Examples 11-13) or the calcium hydroxide or glyceroxide was mixed into the bedding material to provide a sterilisation and sustained release preservation effect (as shown for wet grains in Examples 8-10 and Examples 14-18) and could be "topped up" by dusting over the bedding material as required.

The weight ratio between the solid treatment agent and the substrate was between 1 :5 and 1:100 in different embodiments of the invention. The concentration of the liquid formulation was between 1% and 100% of the maximum solubility of the solid substance in water at 5 to 25 degrees Celsius in other embodiments.

The solubility of calcium diglyceroxide is about 8.35 gram per liter (0.037 molar) in water at *ca* 20 degrees Celsius. The concentration of the calcium diglyceroxide in water of the liquid formulation could therefore be between 0.05 gram per liter (0.00037 molar) and 5 gram per liter (0.037 Molar) at 20 degrees Celsius.

### Example 20

### Treatment of fish and fish products such as fishmeal

Fish was sterilised by using calcium hydroxide and calcium diglyceroxide. In an embodiment of the invention the fish was sprayed with a solution of calcium hydroxide provide a sterilisation and preservation effect (as shown for, respectively, in aqueous medium against representative pathogenic bacteria *i.e.* E.Coli, Salmonella abony and Clostridium difficile in Examples 11-13).

Fishmeal and fish products were sterilised using calcium glyceroxide or calcium hydroxide. In different embodiments fishmeal was mixed with calcium hydroxide or calcium glyceroxide in solid form during or soon after production to provide a sterilization and sustained release preservation effect (as shown for wet grains in Examples 8-10 and Examples 14-18). The Applicant has found that it easy for feed and meal plants to handle solid treatment agents such as calcium glyceroxide powders or granules as no additional investment is required.

A further benefit of the solid formulations is the ongoing protection of the finished feed product against harmful bacteria and fungal infections which give rise to the formation of mycotoxin production due to the demonstrated slow release of anti-microbial active from for example calcium diglyceroxide granules over time (Examples 15-18).

The weight ratio between the solid treatment agent and the substrate in different embodiments of the invention was between about 1:5 and 1:100.

The solubility of calcium diglyceroxide is about 8.35 gram per liter (0.037 molar) in water at ca 20 degrees Celsius. The concentration of the calcium diglyceroxide in water of the liquid formulation could therefore be between 0.05 gram per liter (0.00037 molar) and 5 gram per liter (0.037 Molar) at 20 degrees Celsius.

### Example 21

### Treatment of meat products and carcasses

Carcasses and meat product at the final wash stage were, in different embodiments of the invention, treated by spraying with a solution of calcium hydroxide or calcium diglyceroxide in water to provide a sterilisation and preservation effect (as shown for calcium hydroxide and calcium diglyceroxide, respectively, in aqueous medium against representative pathogenic bacteria *i.e.* E.Coli, Salmonella abony and Clostridium difficile in Examples 11-13). The treatment was found to be safe and unlike chlorine-based products was not light-sensitive and did not form carcinogenic by-products when in contact with organic matter.

The weight ratio between the calcium hydroxide or calcium diglyceroxide and the substrate was between about 1:5 and 1:100. The solubility of calcium diglyceroxide is about 8.35 gram per liter (0.037 molar) in water at ca 20 degrees Celsius. The concentration of the calcium diglyceroxide in water of the liquid formulation could therefore be between 0.05 gram per liter (0.00037 molar) and 5 gram per liter (0.037 Molar) at 20 degrees Celsius.

It is an advantage of the invention illustrated that the method of the invention results in a substantial reduction in the rate of degradation of fermentation residues and effectively sanitises the residue. This reduction is believed to be caused primarily by the generation of a reservoir of anions with anti-microbial properties resulting for example from the addition of calcium glyceroxides which provides glyceroxyl ions as an effective anti-microbial agent and/or the addition of calcium hydroxide or calcium oxide which leads through reaction with water to the formation of calcium hydroxide which provides hydroxyl ions as an effective anti-microbial agent. The effect appears to be enhanced by the partial removal of water, i.e. the secondary mode of preservation which also pertains to air-drying of the preserved material over time. The secondary mode of preservation *i.e*. the additional shelf life enhancement following primary chemical action may explain the longer than expected observed preservation effect that could be expected to be ascribed to chemical treatment only. Thus, the primary chemical sterilisation at the early stages of the trial is believed to be enhanced by a secondary preservation effect through mechanical air-drying of wet biomaterials over time which creates a hostile environment for microorganisms. The secondary drying effect can be compared to heat drying, however it is expected that heat-dried material would be subject to degradation through microbial action when exposed to moisture, whereas the chemically treated material is self-sterilising due the presence of the preservative and would be expected to be much more stable than a similar heat-dried material when exposure to moisture for example during storage or transportation.

Another advantage of the invention is the demonstrated sustained release effect of the preservative such as calcium diglyceroxide in granular form which leads to an enhanced preservation effect and hence shelf life compared to the same substance at the same dose in fine, powder form. The Applicant believes that in the case of the granular dosage form the active biocide such as the glyceroxide and/or hydroxide ions are released slowly over time where and when the material and thus the granules are exposed to water *i.e.* anti-microbial action where and when required due to increased microbial levels at these locations and times, which explains the demonstrated superior preservation compared to the powder (Example 17).

It is a further advantage of the invention illustrated that the method of the invention produces an added-value material in an energy-saving and cost-effective manner. It is a further advantage of the invention that the removal of the water which reacts with the metal oxide to produce a hydroxide has no detrimental effect on the nutrient content of the product under the mild temperature treatment application of the invention. The treatment also reduces the requirement for, and potential damage caused by downstream heat drying. The loss of moisture and the elevated pH deprives degradation-causing organisms of a suitable environment in which to live and multiply. Any pockets of unreacted oxide will act as water scavengers and help to maintain a reservoir for slow release of anti-microbial hydroxyl and/or glyceroxyl anions over time. Increase in moisture is expected to increase microbial growth, but will on the other hand also enhance the conversation of unreacted oxide to hydroxide and furthermore facilitate the solubilisation of hydroxide and glyceroxide releasing hydroxyl ions and glyceroxyl ions, respectively, and hence increase the dose of available biocide (hydroxyl anions and glyceroxyl ions) where and when most needed (sustained release effect).

It is an added advantage of the mild procedure of the invention, as opposed to conventional heat drying, that the low temperature reduces heat degradation of nutrients and minimises detrimental effects on the nutrients through, for example, the Maillard reaction. It is a further advantage of the invention that through destruction of fungi the levels of various mycotoxins produced by these organisms are reduced or eliminated. The base treatment has been demonstrated to kill pathogenic bacteria such as Salmonella abony, Clostridium species, Escherichia coli, and the like and may deactivate mycotoxins such as fumonisins. The reduction in the amount of available free moisture in which microorganisms can multiply, the presence of hydroxide and/or glyceroxide and the slow release of hydroxide and/or glyceroxide due to the relatively low solubility of calcium hydroxide and/or calcium glyceroxides all appear to enhance the shelf life of the material.

The present application and invention further includes the subject matter of the following numbered clauses:
1. A method of producing an animal feed product from a wet biological material, the wet biological material having a physical form selected from solutions, suspensions, emulsions, gums, mousses, sludges, slurries, and particulate materials, and the method including the step of combining the biological material with a base comprising a metal oxide in an amount which is sufficient to heat the biological material to a temperature of above 50°C by reaction of water in the biological material with the metal oxide to produce the animal feed product, the product having a physical form which is easier to handle that that of the wet biological material and which is selected from particulate materials and granular materials.
2. A method as stated in clause 1, in which the amount of the metal oxide is sufficient to heat the biological material to a temperature of above 70°C.
3. A method as stated in clause 1, in which the amount of the metal oxide is sufficient to heat the biological material to a temperature of above 90°C.
4. A method as stated in any one of clauses 1-3 inclusive, in which the metal oxide is calcium oxide.
5. A method as stated in any one of clauses 1-4 inclusive, in which the metal oxide is in a form selected from powder, granules and mixtures thereof.
6. A method as stated in any of clauses 1-5 inclusive, in which the base includes a further component selected from metal hydroxides, metal alkoxides and mixtures thereof.
7. A method as stated in clause 6, in which the weight ratio of the metal oxide to the further component is in the range of 1:1 to 9:1.
8. A method as stated in clause 6 or clause 7, in which the metal hydroxide is calcium hydroxide and the metal alkoxide is selected from one or more calcium glyceroxides.
9. A method as stated in clause 8, in which the one or more calcium glyceroxides are selected from calcium monoglyceroxide, calcium diglyceroxide, tricalcium octaglyceroxide and mixtures thereof.
10. A method as stated in any one of the preceding clauses, which includes the additional step of treating the wet biological material with at least one acid prior to combining the wet biological material with the metal oxide.
11. A method as stated in clause 10, in which the acid is selected from phosphoric acid, hydrochloric acid, sulphuric acid and organic acids.
12. A method as stated in clause 11, in which the organic acid is selected from palmitic acid, stearic acid, lactic acid, amino acids, derivatives thereof, analogues thereof and combinations thereof.
13. A method as stated in any one of the preceding clauses, which includes the additional step of adding a diluent selected from water, an animal feed compatible material and combinations thereof to the wet biological material.
14. A method as stated in clause 13, in which the animal feed compatible material is glycerol.
15. A method as stated in any one of the preceding clauses, in which the wet biological material is selected from yeast cream suspensions, yeast wall suspensions, liquid betaine extracts, pot ale syrups, distillers grains, yeast protein concentrates, wet distillers solubles, mashes, lees, dregs, brewers grains, condensed solubles and mixtures of any two or more thereof.
16. A method as stated in any one of clauses 4-15 inclusive, in which the weight ratio between the calcium oxide and the wet biological material is between about 1:1 and 1:10.
17. A method as stated in clause any one of clauses 10-16 inclusive, in which the weight ratio between the wet biological material and the acid is between about 1:0 and 1:0,9.
18. A method as stated in clause 17, in which the weight ratio between the wet biological material and the acid is between about 1:0 and 1:0,5.
19. A method as stated in any one of clauses 14-18 inclusive, in which the weight ratio between the wet biological material and the glycerol is between about 1:0 and 1:2.
20. A method of reducing the rate of microbiological degradation of a wet biological material, the wet biological material being useful in the manufacture of animal feedstuffs and having a shelf life of between about 1 and 7 days and being selected from solutions, suspensions, emulsions, gums, mousses, sludges, slurries, pastes and particulate materials, the method including the step of adding a base to the wet biological material, to produce a product with a shelf life of more than 7 days.
21. A method as stated in clause 20, in which the product has a shelf life of more than 21 days.
22. A method as stated in clause 21, in which the product has a shelf life of more than 63 days.
23. A method as stated in any one of clauses 20-22 inclusive, in which the base is selected from metal oxides, metal hydroxides, metal alkoxides and mixtures thereof.
24. A method as stated in clause 23, in which the base is selected from one or more calcium glyceroxides.
25. A method as stated in any one of clauses 20-24 inclusive, in which the base is in a form selected from powder, granules, mixtures thereof and solutions.
26. A method as stated in any one of clauses 20-25, which includes the additional step of adding an animal feed compatible material to the wet biological material.
27. A method as stated in clause 26, in which the animal feed compatible material is glycerol.
28. A method as stated in any one of clauses 20-27 inclusive, in which the wet biological material is selected from yeast cream suspensions, yeast wall suspensions, liquid betaine extracts, pot ale syrups, distillers grains, yeast protein concentrates, wet gums, wet distillers solubles, mashes, lees, dregs, brewers grains, condensed solubles and mixtures of any two or more thereof.
29. A method as stated in any one of clauses 23-28 inclusive, in which the weight ratio between the base and the wet biological material is between about 1:5 and 1:100.
30. A method as stated in any one of clauses 27-29 inclusive, in which the weight ratio between the wet biological material and the glycerol is between about 1:0 and 1:2.
31. A method as stated in clause 29 or clause 30, in which the base is a calcium glyceroxide or mixture of calcium glyceroxides and the weight ratio between the calcium glyceroxide or mixture of calcium glyceroxides and the wet biological material is between about and 1:5 and 1:100.
32. An animal feed product prepared by a method as stated in any one of clauses 1 to 19 inclusive.
33. An animal feedstuff comprising an animal feed product prepared by a method as stated in any one of clauses 1 to 19 inclusive.
34. A method of producing an animal feedstuff comprising the step of combining an animal feed product as stated in clause 33, with one or more nutrient components.
35. A method selected from sterilising, preserving or both sterilising and preserving a substrate, the method including the step of exposing the substrate to a composition which includes components selected from one or more calcium glyceroxides, calcium oxide, calcium hydroxide and mixtures thereof.
36. A method as stated in clause 35, in which the components are selected from calcium diglyceroxide, a higher glyceroxide and mixtures thereof.
37. A method as stated in clause 35 or clause 36, in which the composition is in a form selected from granules, powders, mixtures thereof, aqueous solutions, alcoholic solutions, aqueous alcoholic solutions and suspensions.
38. A method as stated in any one of clauses 35-37 inclusive, in which the substrate is selected from particulate, fibrous or solid materials.
39. A method as stated in clause 38, in which the substrate is selected from fermentation residues, animal carcasses, fish meal products, wood chips and animal bedding material.
40. A method as stated in any one of clauses 35 to 39 inclusive, in which exposing the substrate is selected from spraying, dipping and painting.
41. A method as stated in any one of clauses 35 to 40 inclusive, in which the weight ratio between the composition and the substrate is between about 1:5 and 1:100.
42. A method as stated in any one of clauses 37 to 41 inclusive, in which the composition is in a form selected from aqueous solutions, alcoholic solutions and aqueous alcoholic solutions and the amount of the component in the solution is between 1% and 100% of the maximum solubility of the component in the solution.

## Claims

1. A method of producing an animal feed product from a wet biological material which is subject to microbiological degradation, the wet biological material having a physical form selected from solutions, suspensions, emulsions, gums, mousses, sludges, slurries and particulate materials, and the method including the steps of optionally treating the wet biological material with at least one acid, combining the wet biological material with a base comprising calcium oxide the weight ratio of the calcium oxide to the wet biological material being between 1:1 and 1:10 to heat the biological material to a temperature of above 70°C by reaction of water in the biological material with the metal oxide in an exothermic reaction between the metal oxide and the free water where the exothermic reaction aids to drive water from the material and enhance the drying of the material to produce the animal feed product, the product having a reduced rate of microbiological degradation, and a physical form which is easier to handle than that of the wet biological material and which is selected from particulate materials and granular materials.

2. A method as claimed in claim 1, in which the amount of the calcium oxide is sufficient to heat the biological material to a temperature of above 90°C.

3. A method as claimed in claim 1 or claim 2, in which the calcium oxide is in a form selected from powders, granules and mixtures thereof.

4. A method as claimed in any of claims 1- 3 inclusive, in which the base includes a further component selected from other metal oxides, metal hydroxides, metal alkoxides and mixtures thereof;
optionally in which the weight ratio of the calcium oxide to the further component is in the range of 1:1 to 9:1.

5. A method as claimed in claim 4, in which the metal hydroxide is calcium hydroxide.

6. A method as claimed in any one of the preceding claims, in which the acid is selected from phosphoric acid, hydrochloric acid, sulphuric acid and organic acids;
optionally in which the organic acid is selected from palmitic acid, stearic acid, lactic acid, amino acids, derivatives thereof, analogues thereof and combinations thereof.

7. A method as claimed in any one of the preceding claims, which includes the additional step of adding a diluent selected from water, an animal feed compatible material and combinations thereof to the wet biological material.

8. A method as claimed in claim 7, in which the animal feed compatible material is glycerol.

9. A method as claimed in any one of the preceding claims, in which the wet biological material is selected from yeast cream suspensions, yeast wall suspensions, liquid betaine extracts, pot ale syrups, wet gums, distillers grains, yeast protein concentrates, wet distillers solubles, mashes, lees, dregs, brewers grains, condensed solubles and mixtures of any two or more thereof.

10. A method as claimed in claim any one of the preceding claims, in which the weight ratio between the wet biological material and the acid is between about 1:0 and 1:0,9.

11. A method as claimed in claim 10, in which the weight ratio between the wet biological material and the acid is between about 1:0 and 1:0,5.

12. A method as claimed in any one of claims 8-11 inclusive, in which the weight ratio between the wet biological material and the glycerol is between about 1:0 and 1:2.

13. An animal feed product prepared by a method as claimed in any one of claims 1 to 12 inclusive.

14. An animal feedstuff comprising an animal feed product prepared by a method as claimed in any one of claims 1 to 12 inclusive.

15. A method of producing an animal feedstuff comprising the step of combining an animal feed product as claimed in claim 14, with one or more nutrient components.
